# EUROPEAN PATENT SPECIFICATION

(11) **EP 3 979 461 B1**
(45) Date of publication and mention of the grant of the patent: **30.08.2023**
(21) Application number: 20199778.0
(22) Date of filing: 02.10.2020
(51) Int. Cl.: H02J 15/00, H02J 3/14

(54) **FACILITY FOR COMPENSATING EXTERNAL POWER SUPPLY FLUCTUATIONS AND METHOD FOR OPERATING THE SAME**
EINRICHTUNG ZUR KOMPENSATION EXTERNER STROMVERSORGUNGSSCHWANKUNGEN UND VERFAHREN ZUM BETRIEB DERSELBEN
INSTALLATION DE COMPENSATION DES FLUCTUATIONS D'ALIMENTATION ÉLECTRIQUE EXTERNE ET SON PROCÉDÉ DE FONCTIONNEMENT

(43) Date of publication of application: 06.04.2022
(73) Proprietor: Uniper Hydrogen GmbH, 40221 Düsseldorf (DE)
(72) Inventor: Markowz, Georg, 63755 Alzenau (DE)
(74) Representative: Ter Meer Steinmeister & Partner

(56) References cited:
- EP-A1- 2 602 899

## Description

The present invention relates to a facility comprising a device for the production of hydrogen and solid carbon from a C₁- to C₄-alkane-containing gas by use of electric energy, a power plant unit with a predefined maximum carbon footprint and a controller configured to output a command which determines the operation state of the device and the power plant unit depending on an information with respect to a power in an external power grid. Furthermore, the present invention relates to a method for operating such a facility.

The efforts that are currently undertaken in order to reduce the worldwide carbon emissions will result in higher shares of electricity from renewable sources. A grid which uses high shares of electricity from renewable sources will, however, suffer from larger supply fluctuations than presently experienced. This is due to the natural phenomena from which renewable sources derive their energy and the fact that these phenomena follow their own rules: There will be periods of shortages on the one hand, since for example the sun does not always shine and the wind does not always blow. On the other hand, there will be periods of overproduction, for example if different renewable sources are active at the same time.

In the past, such fluctuations and fluctuations from demand have partially been compensated for by correspondingly coordinated, flexible operation of gas-fired and, to a smaller extent, coal-fired power plants, optionally also by use of storage such as pumped-hydro power. However, the expansion of renewable wind and power production and thereby increased volatility in production has reached a level which may exceed the capacity of flexibility of existing power production and storage plants. For example, known power plants such as large gas-fired or especially coal-fired power plants are typically not shut down for only 2-3 hours due to inefficiencies and high costs associated with load changes. Additionally, it is difficult or inefficient to operate them at a reduced load. Besides that, the operation of coal-fired power plants shall generally be phased out in the coming years in order to combat climate change. Consequently, the related capacity to provide power in times of low shares of renewables is expected to decrease further. An effective compensation of power supply fluctuations in both directions, i.e. due to too high and too low shares of renewables, will be lacking.

The construction of additional gas-fired power plants alone, which has been suggested in the prior art, results in further technical challenges and high specific costs. As has already been indicated above, frequent start-ups and shut-downs of gas-fired power plants would result in mechanical stress for the components and would lead to costly wear down. Moreover, the extra amount of fuel which is consumed in a non-steady start-up phase may outweigh the benefits of the flexible operation of a plurality of gas-fired power plants. Summarizing, operators of conventional gas-fired power plants aim at keeping the cumulated time of start-ups and shut-downs as low and/or the operational full load hours as high as possible. In other words, they try to operate these plants with a very low "non-steady-state-ratio", wherein the non-steady-state-ratio is defined as a ratio of the cumulated time of start-ups and shut-downs to the total operation time.

Besides, gas-fired power plants could face low capacity factors and low number of annual full load hours respectively because they would be needed only in times of low power generation from renewables. The total cost of power generation would then be too high. This could prevent investors from extending gas-fired power generation capacities.

The storage technologies which are known from the prior art might, to a certain extent, be helpful both as consumers in times of power oversupply and providers in times of lack of power generation. Nevertheless, they may be very costly, especially if power has to be stored over longer periods of time. Some of these storage technologies are also limited in their potential for capacity expansion for other reasons (e.g. pumped-hydro). Known storage technologies can be broadly classified as mechanical, chemical, electrical or thermal.

Among the mechanical storage technologies, pumped storage facilities are very common. Pumped storage facilities store electrical energy in the form of gravitational potential energy of water. Excess electrical energy is used to pump water from a lower reservoir to a reservoir at a higher level. During periods of higher electrical demand, the water which is stored at the higher level is released through turbines and produces electric power again. A considerable drawback of this technology is that it depends on a certain geographical situation. A pumped storage facility cannot be set up everywhere. Consequently, general potential may be limited. Also, the excess power may have to be transported over a long distance to the pumped storage facility and optionally back upon feeding electricity back into the grid, which would lead to an overall undesirable high loss of energy.

In the class of chemical storage technologies several approaches are known.

A first approach uses excess electrical energy in order to drive an electrolysis cell for the production of hydrogen. However, water electrolysis today has some general disadvantages due a high specific energy demand and still relatively high investment costs. The study of T. Smolinka et al. ("Industrialisation of water electrolysis in Germany: Opportunities and challenges for sustainable hydrogen for transport, electricity and heat", 2018) gives an overview of current state-of-the-art and development potentials. In order to provide electricity in times of low production of renewables, such hydrogen would have to be re-converted to electricity by means of for example gas turbines, gas engines or fuel cells. Yet, the efficiency of the total process of electrolytical water splitting and reconversion to electrical energy is low and thus very unfavorable.

Also, the capacity factor of electrolysis often remains quite low in many cases since only operation on purely renewable excess electricity is ecologically meaningful. Especially, regarding the total CO₂ emissions along the whole process chain, it does not make sense to run an electrolysis on electricity generated from a natural gas fired power plant. The carbon footprint of electricity produced upon reconversion of such hydrogen would be higher compared to the electricity produced directly from natural gas.

Likewise, it would not be reasonable from an ecological point of view to use hydrogen from an electrolysis that is operated by means of electricity from a natural gas-fired power plant or a power plant with a higher carbon footprint (like a coal fired power plant) for other conventional applications such as in a refinery or chemical industry or to substitute natural gas for production of heat. The carbon footprint would, in all cases, be higher than for the conventional references.

In order to overcome limitations in hydrogen storage, logistics and infrastructure, the power-to-gas concept has recently been promoted. Electricity is first converted to hydrogen by electrolysis, followed by a methanation step to produce methane which can then be fed into the existing natural gas grid.

Such an approach is, for example, known from WO 2010/115983 A1. According to this prior art document, a system is provided which includes a hydrogen generating device, a device to generate methane from hydrogen and CO₂, a gas-into-electricity conversion device and a control device which is configured to variably set the power need of the hydrogen generating device and/or the feed-in power of the gas-into-electricity conversion device depending on a time-dependent power demand in the electricity grid. However, in order to ensure an ecologically meaningful operation, the electrolysis must use renewable electricity only or predominantly. This will inevitably result in low utilisation of the electrolysis, a low capacity factor and, thus, high total specific costs of hydrogen.

Furthermore, an approach for controlling a fuel cell system to improve at least one of the starting performance and the stopping performance of the system while suppressing an increase in electric rate for a consumer's home is known from EP 2 602 899 A1.

Starting from the available energy storage technologies and known approaches for compensating fluctuations in the electricity grid, the objective underlying the present invention is the provision of a facility and a method which overcome the deficiencies of the prior art and allow to economically produce and consume energy in a more ecological, efficient and flexible manner.

This objective is achieved by the provision of a facility and a method for operating the facility according to the independent claims.

The facility with controllable power production and consumption according to the present invention comprises at least one device for the production of hydrogen and solid carbon from a C₁- to C₄-alkane-containing gas by use of electric energy which includes at least one device for separating solid carbon from hydrogen, a power plant unit with a carbon footprint from 0 to 600 g_{CO2}/kWh_{used}, and a controller configured to output a command which determines the operation state of the device for the production of hydrogen and solid carbon and the power plant unit depending on an information with respect to a power in an external power grid, wherein the power plant unit is a gas-fired power plant or a gas-fired combined cycle power plant.

In this context, the carbon footprint of a power plant denotes the amount of CO₂ emitted into the atmosphere by the power plant itself upon combustion of fossil fuels (e.g., natural gas, fossil heating oil, hard coal or lignite including derived fuels and wastes) per respective amount of energy produced by the power plant.

The unit "kWh_{used}" must be seen in the context of power plants which not only provide electricity but also heat for technical applications, such as industrial process heat or district heating. In this context, the unit "kWh_{used}" denotes the amount of energy which is technically used either as heat or as electrical energy. Heat which is lost to the environment or which is absorbed by a cooling fluid without any specific technical benefit does not fall under this amount of energy and does, thus, not contribute to the "kWh_{used}".

Further, the above-defined carbon footprint of a power plant may vary over time. For example, the amount of heat being co-produced and technically used along with electricity may change over time (such as for heat for district heating). Also, the efficiency of a power plant may change dependent on its load or in ramp-up or shut down phases. For example, gas-fired power plants may have higher efficiencies at higher loads. In this context, the carbon footprint of electricity shall always refer to the annually averaged specific emissions.

C₁- to C₄-alkane-containing gas means a gas which mainly comprises methane, ethane, propane, butane, 2-methyl-propane, or mixtures thereof. The sum of the C₁- to C₄-alkane(s) in the gas is at least 10 vol. %, preferably at least 25 vol. %, more preferably at least 50 vol. %, more preferred at least 75 vol. %, even more preferred at least 90 vol. %. In some embodiments, the C₁- to C₄-alkane-containing gas is natural gas. In certain embodiments, the C₁- to C₄-alkane-containing gas contains methane and/or propane. This is advantageous as both gases can be obtained in large quantities, e.g., methane from natural gas and propane from the production of hydrogenated vegetable oils. Most preferably, the C₁- to C₄-alkane containing gas is natural gas or a methane-containing gas. This means that either natural gas may be used as a gas comprising methane or another gas comprising methane. Most preferably, the C₁- to C₄- alkane-containing gas contains methane, in particular at least 25 vol. % methane, more preferably at least 50 vol. % methane, even more preferably at least 75 vol. % methane, most preferably at least 90 vol. % methane. If high shares of methane are comprised in the C₁- to C₄-alkane-containing gas, it is clearly preferred to install the inventive facility in proximity to a biorefinery.

The C₁- to C₄-alkane-containing gas may include higher boiling components, e.g., C₅-alkanes, olefins, aromatic components, such as benzene, and mixtures thereof, or even mixtures with components containing low amounts of oxygen, e.g., long chain aldehydes like C₁₂H₂₄O. In one example, the C₁- to C₄-alkane-containing gas may include higher boiling components in the range of 0.1 to 50 vol. %, preferably in the range of 0.5 to 30 vol. %, even more preferred in the range of 1 to 10 vol. %. Most preferably, however, the C₁ to C₄-alkane containing gas does, however, not include any of the mentioned higher boiling components.

In certain embodiments, the C₁- to C₄-alkane-containing gas comprises less than 5 vol. % O₂, preferably less than 2 vol. % O₂, most preferably less than 1 vol. % O₂, less than 10 vol. % CO, preferably less than 5 vol. % CO, most preferably less than 2.5 vol. % CO, less than 10 vol. % CO₂, preferably less than 5 vol. % CO₂, most preferably less than 2.5 vol. % CO₂, and/or less than 10 vol. % N₂, preferably less than 5 vol. % N₂, most preferably less than 1 vol. % N₂. Most preferably, however, the C₁ to C₄-alkane containing gas is essentially free of O₂, CO, CO₂ and N₂. That is, the C₁ to C₄-alkane containing gas according to the present invention essentially consists of C₁- to C₄-alkanes and optionally H₂.

In certain embodiments of the present invention the C₁- to C₄-alkane-containing gas comprises from 0.1 up to 25 vol. %, preferably from 0.5 up to 15 vol. %, more preferably from 1 up to 5 vol. %, H₂. The C₁- to C₄- alkane-containing gas may also comprise from 0.1 up to 10 vol. %, preferably from 0.5 up to 7 vol. %, more preferably from 1 up to 5 vol. %, acetylene. Most preferably, however, the C₁ to C₄-alkane containing gas is essentially free of H₂ and acetylene.

By combining a power plant unit with a device for the production of hydrogen and solid carbon it is possible to provide a positive balancing power and electrical energy respectively (additional power and energy which can be supplied to an external power grid) and a negative balancing power and electrical energy respectively (excess power from the external power grid can be consumed) depending on an information with respect to a power in an external power grid, while at the same time enabling high annual full load hours of operation for the respective plants which favorably increases the return on investment. Furthermore, the facility is also favorable from an economic point of view since it can be operated in a flexible manner which saves costs. Taken together, the facility according to the current invention is ideally suited to compensate power supply fluctuations.

The device for the production of hydrogen and solid carbon does not correspond to a conventional reformer such as a steam reformer for natural gas. Instead, it is preferred that the device for the production of hydrogen and solid carbon from a C₁- to C₄-alkane-containing gas operates utmost in the absence of oxygen (such as from steam in a steam reformer) and by use of a thermal plasma as source of energy (instead of burning a fuel). Electric energy may be used to create a thermal plasma and to split the C₁- to C₄-alkane-containing gas in order to obtain high yields of hydrogen and solid carbon.

In terms of specific electrical energy demand per unit of hydrogen produced, i.e. Megawatthours of electrical energy (MWhₑₗ) which are consumed for the production of 1 MWh of lower heating value of hydrogen (MWh_{H2}), the device for the production of hydrogen and solid carbon which uses the C₁- to C₄-alkane-containing gas as a source material is significantly superior over conventional electrolysis cells, i.e. it requires a much lower specific electrical energy demand.

From a physical standpoint, this can be explained by the amount of binding energy of hydrogen-carbon bonds in the alkane-containing gas. This binding energy is low compared to the binding energy of hydrogen-oxygen bonds in water. Due to that, also the required splitting energy is favorably low for said alkane-containing gas. Accordingly, the splitting of an alkane-containing gas into hydrogen and carbon allows for hydrogen production with less specific electrical energy input than the splitting of water in an electrolysis cell.

More specifically, conventional electrolysis cells have a specific electrical energy demand of 1.3-1.5 MWhₑ₁/MWh_{H2}, whereas the device for the production of hydrogen and solid carbon requires about 0.6 MWhₑ₁/MWh_{H2} or less. Moreover, the prospects are promising in so far as that the specific electrical energy demand of the device for the production of hydrogen and solid carbon may be further lowered to less than 0.5 MWhₑ₁/MWh_{H2} or even less than 0.4 MWhₑ₁/MWh_{H2}.

Moreover, if the device for the production of hydrogen and solid carbon is driven with power from a sufficiently "clean" power plant unit, the produced hydrogen has a CO₂-footprint which is significantly smaller than hydrogen that is produced by conventional steam reforming and may even have a smaller CO₂-footprint than natural gas including combustion of the latter. In a preferred embodiment, the power plant unit may thus not be a coal-fired power plant unit.

Still, the device for the production of hydrogen and solid carbon may - dependent on its capacity - in absolute numbers be quite energy-intensive. The electrical design load of one such device may approximately be at least 1 MW, preferably at least 2 MW, more preferably at least 5 MW, even more preferably at least 10 MW, in particular at least 20 MW. Dependent on the maximum design load, the facility can effectively utilise electrical energy from the external grid, e.g. in times of high availability due to an overproduction of electricity from renewables. If several of these devices are provided either at one site or at separate sites, their overall load capacity is correspondingly higher. Especially, the total design load may be in the same order of magnitude as the production capacity of the power plant unit (e.g. 300 MW). Preferably, at least two devices for the production of hydrogen and solid carbon are operated in parallel and independently. More preferably, 2 to 20, furthermore preferably 2 to 10, even more preferably 2 to 5 devices for the production of hydrogen and solid carbon are provided. Running two or more devices in parallel is advantageous as it provides an increased load range and hence flexibility in power consumption. In addition, if one device requires maintenance works the other device or devices, respectively, can continue operation. Downtime of the facility at inopportune moments is avoided. Generally, it may be said that the modular design of the facility with a variable number of devices for the production of hydrogen and solid carbon increases the degrees of freedom and allows a more flexible and customized operation.

The controller configuration guarantees that the operation states of the power plant unit and the at least one device for the production of hydrogen and solid carbon can be coordinated according to an information with respect to a power in the external power grid. Preferably, the information with respect to a power in an external power grid is an information with respect to the current power generation and demand in an external grid, more preferably the power generation and demand in an external grid over a near-term period of time in the future, for example over a period of the next 2 hours, the next 4 hours or the next 6 hours starting from the current moment, but not being limited thereto.

In one embodiment, this information may, for example, be a value which represents the average carbon footprint of the currently produced power of all producers or a selected set of producers feeding the external grid. In another embodiment, this information can consist of a prediction of the average carbon footprint of the produced power of all producers or a selected set of producers feeding the external grid within a near-term period of time, for example the next hour or the next few hours. This prediction can, preferably, be based on the present weather conditions and or weather forecast (e.g. wind and sunlight) and/or the day time (e.g. 8 a.m. or 8 p.m.) and/or day of the week and/or time in the year and/or the number and kinds of power producers contracted by the electricity stock market.

For example, it is known that the profile of the total load of all consumers connected to the public electricity grid shows typical patterns depending on the time of the day, the day of the week and/or the time of the year. On working days in the morning between 6 and 8 o'clock the total demand of electricity consumers connected to the public electricity grid, for example, typically strongly increases. In contrast, on Sundays, the corresponding increase is typically much less steep and there is a generally lower absolute load.

Likewise, it is possible that the information is a value which is a measure of the residual load in the electricity grid. In this context, the residual load is the difference between the current electricity consumption and the current production of electricity by all or a selected set of renewable sources such as from wind and/or solar energy. Last but not least, the information may also be a signal for increasing or decreasing the load which is determined and generated automatically dependent on a frequency in the electricity grid and/or a signal determined directly by the grid operators. This signal may serve to stabilise the electricity grid, e.g. to keep the electricity frequency in a targeted range. The information may also be a combination of the information according to the abovementioned embodiments.

The controller also allows for an installation of the power plant unit and the at least one device for the production of hydrogen and solid carbon at separate sites but connected to the same electricity grid as the controller is able to coordinate their operation even over greater distances. The power plant unit and the at least one device for the production of hydrogen and solid carbon are preferably located at the same production site, in particular within a distance of less than 1 kilometer. However, this is not mandatory.

In one embodiment, the power plant unit and the at least one device for the production of hydrogen and solid carbon may also be located at separate sites. The distance between the power plant unit and the device for the production of hydrogen and solid carbon is at least 2 kilometers, preferably at least 5 kilometers, even more preferably at least 10 km and most preferably from 10 to 200 km. In each case, the controller guarantees the coordination of the two units, wherein the coordination does not mandatorily include a step of supplying hydrogen which is produced by the device for the production of hydrogen and solid carbon to the power plant. The direct supply of hydrogen from the device for the production of hydrogen and solid carbon to the power plant unit is only reasonable over short to moderate distances.

According to a first preferred embodiment, the power plant unit has a carbon footprint from 0 to 500 g_{CO2}/kWh_{used}, more preferably from 0 to 450 g_{CO2}/kWh_{used}, even more preferably from 0 to 400 g_{CO2}/kWh_{used}, most preferably from 0 to 350 g_{CO2}/kWh_{used}. A power plant unit having a carbon footprint of 0 g_{CO2}/kWh_{used} is a power plant which is operated with zero CO₂ emission to the atmosphere, for example renewable power plants such as wind and PV power plants, alternatively nuclear power plants or power plants with capture of all CO₂ from the flue gas and its sequestration before release of the remainder of the flue gas to the atmosphere.

According to a second, but less preferred embodiment, the power plant unit has a carbon footprint from 1 to 500 g_{CO2}/kWh_{used}, more preferably from 2 to 450 g_{CO2}/kWh_{used}, even more preferably from 5 to 400 g_{CO2}/kWh_{used}, most preferably from 5 to 350 g_{CO2}/kWh_{used}. These non-zero lower limits apply to power plants that have to be fueled with a small share of non-renewable energy sources for some reason or with fuels with small carbon footprint such as some renewable fuels.

The use of a power plant unit with such a low carbon footprint contributes to an overall economical and sustainable process.

The ecological balance is even further improved, if the facility does not comprise any coal fired furnaces. Such furnaces could, in principle, be used for burning the carbon which is produced by the device for the production of hydrogen and solid carbon. However, this has a negative impact on the overall CO₂-footprint. Hence, the carbon which is produced by the device for the production of hydrogen and solid carbon is rather used in chemical processes, for example as carbon black or it is sequestered.

According to another preferred embodiment, the device for the production of hydrogen and solid carbon is a device with a yield of solid carbon, in particular carbon black, of at least 40 %, preferably more than 60 %, even more preferably more than 80 %, related to the carbon contained in the C₁- to C₄-alkane-containing feed gas.

The device for separating solid carbon from hydrogen which is included in the device for the production of hydrogen and solid carbon may be a gas-solid separator, such as a centrifugal separator. Preferably, the device for separating solid carbon from hydrogen is selected from a group consisting of a cyclone, in particular a high temperature cyclone, a filter, in particular a high temperature filter, a device containing a fixed or fluidized bed of solid particles, a scrubber, preferably a scrubber using a water-containing scrubbing medium or an oil-based scrubbing medium, and combinations thereof. It is further preferred that the device for separating solid carbon from hydrogen receives an outlet stream from a plasma reactor, which is also comprised by the device for the production of hydrogen and solid carbon, as an input stream. In one embodiment, the device for separating solid carbon from hydrogen separates more than 99.0 wt.-% of the solid carbon that is contained in this input stream.

It is further preferred, that the power plant unit is a power plant unit which is exclusively operated with fluid input streams. Preferably, the power plant unit is a simple-cycle plant, in particular a gas-fired power plant. The gas-fired power plant may include a combustor, a gas-fired steam turbine and a generator. Alternatively, the power plant unit is a gas-fired combined cycle power plant.

It is further preferred that the power plant unit is any power plant unit except from a coal-fired power plant unit. The reason is that a conventional coal-fired power plant unit, especially one without combined production and technical use of heat, would deteriorate the overall CO₂ balance of the process of flexible power production and consumption compared to other technologies.

Moreover, looking at several of the inventive facilities, it is clear that the power plant unit may be different in each facility. In this way, it is possible to rely on a pool of different power plant technologies.

Using a simple-cycle plant as a power plant unit reduces the overall complexity of the facility. Further, if the simple-cycle plant is a gas-fired power plant, it is possible to take advantage of the recent progresses in the design of gas turbines and combustors: In particular, modern gas-fired power plants are able to cope with a very high share of hydrogen as a fuel gas and, thus, allow a cleaner process with less emissions of greenhouse gases.

A combined-cycle power plant comprises both, a gas turbine and a steam turbine. In this way, it can produce up to 50 percent more electricity from the same amount of fuel than a simple-cycle plant.

In one embodiment, the device for the production of hydrogen and solid carbon further includes at least one of a plasma reactor, a device for enrichment of hydrogen, at least one heat exchanger, and a storage tank for at least temporarily storing hydrogen. Preferably, the plasma reactor comprises a thermal plasma generator.

The plasma reactor preferably is a high-temperature reactor which accommodates gases having local temperatures of more than 1000°C and up to at least 1400 °C, preferably up to at least 2000 °C, more preferably up to at least 2800 °C. Preferably, the plasma reactor is a plasma reactor which achieves a high yield of hydrogen and solid carbon and, simultaneously, produces only very small amounts of acetylene, benzene or other unsaturated hydrocarbon compounds. This significantly reduces the tendency of tar formation in the plasma reactor or equipment downstream of the reactor and, thus, also avoids undesired interruption of operation in order to remove corresponding depositions on reactor walls or other equipment in the whole facility.

The plasma section of the plasma reactor preferably includes the thermal plasma generator. The thermal plasma generator may comprise a cathode and an anode which are configured to generate an electric arc within the plasma section, when powered. The electric arc heats C₁- to C₄-alkane-containing gas to form a plasma gas in said plasma section. Amongst others, this involves the formation of ions and radicals. The plasma gas is thus rich of ionized particles and/or radicals derived from the C₁- to C₄-alkane-containing gas.

Devices for the enrichment of hydrogen, i.e. separation of hydrogen from other gases and hydrocarbons such as methane, CO and N₂, are known from prior art. In a preferred embodiment the device for the enrichment of hydrogen is a pressure swing adsorption (PSA) unit. A PSA process is a cyclic process involving the adsorption of impurities, such as CO, CO₂, CH₄ and N₂, from a hydrogen-rich gas stream at an elevated pressure on a solid adsorbent such as a molecular sieve. The operation is carried out at room temperature and preferably at elevated pressure. Several adsorption vessels (adsorbers) are employed so that the process can be driven continuously and one of the adsorbents can be recovered, while the other is being used.

The at least one heat exchanger serves to improve the overall energy balance. Heat that is not utilised in the plasma reactor may advantageously be used for other processes within the device for the production of hydrogen and solid carbon, or within in the power plant unit or in other plants. A method that may be used to figure out, for which purposes the heat can be most efficiently used, is, for instance, the pinch analysis.

The storage tank for at least temporarily storing hydrogen is especially useful in situations in which there may be a temporal mismatch between the production and consumption profile of hydrogen produced by the device for the production of hydrogen and solid carbon. The hydrogen may then be temporarily stored in the tank and may be re-converted to electricity or, alternatively, be utilised chemically or for other purposes at a later point of time. Alternatively, hydrogen may be fed into a hydrogen pipeline or hydrogen network which assists with distributing the produced hydrogen according to the needs of the consumers. The produced hydrogen can, for example, be provided to refineries, hydrogen fueling stations and/or industrial furnaces. Especially, the public transportation system may be a big consumer of the produced hydrogen.

The device for the production of hydrogen and solid carbon may further include at least one of a first gas outlet and a second gas outlet. The first gas outlet and/or the second gas outlet may be connected to a fuel gas inlet of the power plant unit, preferably with an intermediate compression stage. The first gas outlet may be located downstream of the at least one device for separating solid carbon from hydrogen and upstream of the device for enrichment of hydrogen. The second gas outlet may be located downstream of the device for enrichment of hydrogen. The hydrogen which flows through the second gas outlet preferably has a higher purity than the hydrogen which flows through the first outlet. Preferably the hydrogen which flows through the second gas outlet has a purity of at least 95.0 vol.-%, preferably of at least 99.0 vol.-%, even more preferably at least 99.9 vol.-%.

The first and the second gas outlet preferably each comprise several fittings such as two-way-valves and/or three-way-valves. These fittings and corresponding control mechanisms ensure that the flow paths between the device for the production of hydrogen and solid carbon and the power plant unit can be controlled according to the needs and the current mode of operation.

In one embodiment, the fuel gas inlet of the power plant unit is connected to the first gas outlet and/or the second gas outlet of the device for the production of hydrogen and solid carbon and to a reservoir with a C₁- to C₄-alkane-containing gas. In this way, the composition of the fuel gas can be adapted in wide ranges. The fuel gas which enters the combustor of the power plant unit may contain purposely high shares of hydrogen in the range of 25-100 vol.-%, preferably of 40-80 vol.-%, more preferably of 50-70 vol.-% or moderate shares of hydrogen in the range of between 0.5 and 25 vol.-%, preferably between 1 and 25 vol.-% and more preferably 1 and 20 vol.-%. The ratio of hydrogen to C₁- to C₄-alkane(s) in the alkane-containing gas in the inlet of the power plant unit is preferably adjusted in such a way that the resulting inlet stream for the power plant has suitable fuel gas parameters such as density, Wobbe-index and/or flame speed in desired ranges. In addition, a further pipeline for separate fuel gases such as propane and butane can be connected to the inlet of the power plant unit in order to adjust the fuel gas parameters.

Preferably, the facility further comprises means for powering the device for the production of hydrogen and solid carbon with power from the external power grid, electrical power from said power plant unit or a mix of the aforementioned power types. The means may be at least one of a grid connector and a transformer.

The controller may further have at least one of the following configurations.

In one embodiment, the controller may be further configured to run the at least one device for the production of hydrogen and solid carbon and the power plant unit in such a way that the sum of full load hours of the respective plants is not more than 15,000 full load hours per year, preferably not more than 14,000 full load hours per year, even more preferably not more than 13,000 full load hours per year, most preferably not more than 12,000 full load hours per year.

In another embodiment, the controller may be further configured to run the power plant unit for at least 250 full load hours per year during times at which the at least one device for the production of hydrogen and solid carbon runs at not more than 50 % of its design capacity, in particular at 0 % of its design capacity, preferably for at least 500 full load hours per year during times at which the at least one device for the production of hydrogen and solid carbon runs at not more than 50 % of its design capacity, in particular at 0 % of its design capacity, more preferably for at least 750 full load hours per year during times at which the at least one device for the production of hydrogen and solid carbon runs at not more than 50 %, of its design capacity, in particular at 0 % of its design capacity, even more preferably for at least 1,000 full load hours per year during times at which the at least one device for the production of hydrogen and solid carbon runs at not more than 50 % of its design capacity, in particular at 0 % of its design capacity, most preferably for at least 1,500 full load hours per year during times at which the at least one device for the production of hydrogen and solid carbon runs at not more than 50 % of its design capacity, in particular at 0 % of its design capacity.

This first configuration of the controller is preferred in cases in which the information with respect to the power in the external power grid is a value which represents the average carbon footprint of the currently produced power of producers connected to the external grid or a value which represents a corresponding prediction for the near-term period of time and in which this value is indicative of a low share of renewable energy.

On the other hand, the controller may be advantageously configured in such a way that it runs the at least one device for the production of hydrogen and solid carbon for at least 250 full load hours per year during times at which the power plant unit runs at not more than 50 % of its design capacity, in particular at 0 % of its design capacity, preferably for at least 500 full load hours per year during times at which the power plant unit runs at not more than 50 % of its design capacity, in particular at 0 % of its design capacity, preferably for at least 1,000 full load hours per year during times at which the power plant unit runs at not more than 50 % of its design capacity, in particular at 0 % of its design capacity, more preferably for at least 1,500 full load hours per year during times at which the power plant unit runs at not more than 50 % of its design capacity, in particular at 0 % of its design capacity, most preferably for at least 2,000 full load hours per year during times at which the power plant unit runs at not more than 50 % of its design capacity, in particular at 0 % of its design capacity.

This second configuration of the controller, again, particularly pertains to cases in which the information with respect to the power in the external power grid is a value which represents the average carbon footprint of the currently produced power of producers connected to the external grid or a value which represents a corresponding prediction for the near-term period of time. However, the second configuration is preferable in cases in which the value is indicative of a high share of renewable energy.

Furthermore, it is widely known that the efficiency of a power plant is dependent on the load at which it runs. The smaller the load in comparison to the design capacity of the respective power plant, the worse also the efficiency. Thus, if it is expected that there will be a high share of renewable energy in the external grid for a long time, it is beneficial to shut down the power plant unit completely (i.e. run it at 0 % of its design capacity).

The full load hours per year of a power plant are obtained by calculating the hours that the respective unit would have taken to produce the same amount of energy, when it had been operating at full capacity (i.e. its design capacity). Correspondingly, the full load hours per year of the at least one device for the production of hydrogen and solid carbon are obtained by calculating the hours that the respective unit would have taken to consume the same amount of energy, when it had been operating at full capacity (i.e. its design capacity). These full load hours allow to compare the plant utilisation of separate units or of the same unit in separate years.

It is further preferred, that the controller is configured to output different commands in order to achieve three distinct stationary operation states of the facility. In a first mode (i) the controller outputs a command to run the power plant unit at a high load and to shut down the device for the production of hydrogen and solid carbon. In a second mode (ii) the controller outputs a command to run the device for the production of hydrogen and solid carbon at a high load and to shut down the power plant unit. In a third mode (iii) the controller outputs a command to run both units at high loads, the device for the production of hydrogen and solid carbon and the power plant unit.

Within the context of the current invention, a "high load" is synonymous with more than 50 % of the maximum load (i.e. full load or maximum design capacity of the facility), preferably more than 70 % of the maximum load or more preferably more than 90 % of the maximum load. A command to "shut down" one of the units includes a command to completely shut down the unit or to run it at a reduced load of less than 30 % of the maximum load or preferably less than 20 % of the maximum load. The controller is configured to determine the exact loads based on the information with respect to the power in the external power grid. However, the controller may also include learning algorithms. In this way the determination of the exact loads takes the success of previous commands and operation modes into account. The success may be rated according to the degree to which a stabilization of power supply in the external grid has been achieved or according to the system wear that has been caused. The facility may thus for example show a hysteresis behavior. Alternatively, the facility may increasingly use predictive tools for inclusion of predicted information of the electricity grid within the near-term future.

In one embodiment, the device for the production of hydrogen and solid carbon includes a specifically designed plasma reactor. This plasma reactor may comprise
i) a plasma section comprising
   - an anode and a cathode for generating an electric arc, the arc extending within the plasma section, and
   - at least one first feed line for introducing a C₁- to C₄-alkane-containing plasma gas into the plasma section of the reactor,
      - wherein the anode has a hollow channel along the flow direction of the main stream of the plasma gas which has an inner surface, an outlet in the flow direction of the main stream of the plasma gas which forms the open end of the anode in the flow direction of the main stream, and at least one inlet for receiving the C₁- to C₄-alkane-containing plasma gas introduced into the plasma section of the reactor via the at least one first feed line wherein the inlet forms the open end of the anode facing into the direction opposite to the flow direction of the main stream, and wherein the anode is configured such that the plasma gas flows through the hollow channel via the open end of the anode facing into the direction opposite to the flow direction of the main stream and the open end of the anode in the flow direction of the main stream, wherein the plasma gas contacts the inner surface of the hollow channel of the anode on its passage through the anode, and
      - wherein said anode and said cathode are arranged so that the arc generated by them is formed in said plasma section to form a plasmaeous plasma gas in said plasma section from the C₁- to C₄-alkane-containing plasma gas introduced into said plasma section through said at least one first feed line, and wherein the foot points of the electric arc contacting the anode are located on the inner surface of the hollow channel of the anode, and
ii) a second reactor section directly downstream of the plasma section of the reactor in the flow direction of the main stream, the second reactor section comprising
   - a first subsection and a second subsection, wherein the second subsection is directly downstream of the first subsection in the flow direction of the main stream, and
   - outlet means for withdrawing components from the reactor, wherein the outlet means are located at the end of the second reactor section in the flow direction of the main stream, wherein
      - the first subsection comprises at least one second feed line for introducing a C₁- to C₄-alkane-containing gas into the second reactor section, wherein
      - the at least one second feed line is arranged such that the C₁- to C₄-alkane-containing gas which is introduced into the reactor via the at least one second feed line is introduced into the plasmaeous gas at a position downstream of the foot points of the electric arc in the flow direction of the main stream, so that in the first subsection of the second reactor section downstream of the at least one second feed line a mixture is formed from the plasmaeous plasma gas leaving the plasma section and the C₁- to C₄-alkane-containing gas of the at least one second feed line, and
      - wherein the position of the at least one second feed line along the flow direction of the main stream defines the beginning of the second reactor section and of its first subsection, and
      - wherein the volume of the plasma section which begins at the most upstream position at which the inner surface of the hollow channel of the anode is facing the electric arc and reaches down to the end of the plasma section of the reactor has a volume in the range of 0.0001 m³ to 0.4m³, preferably in the range of 0.001 to 0.2 m³, and defines a reference volume, and
      - wherein the volume of the first subsection of the second reactor section is in the range of 10 to 200 times the reference volume, preferably in the range of 20 to 100 times the reference volume, and
      - wherein the volume of the total second reactor section is in the range of 20 to 2,000 times the reference volume, preferably in the range of 40 to 1,000 times the reference volume, and
   - wherein the reactor comprises in the first subsection of the second reactor section and/or in the plasma section in the range downstream in the flow direction of the main stream of the foot points of the electric arc on the inner surface of the hollow channel of the anode down to the end of the plasma section at least at one point a flow cross-section transverse to the flow direction of the main stream which is greater by at least a factor of 5, preferably by at least a factor of 10, in comparison with the average flow cross-section of the anode transverse to the flow direction of the main stream in the range of the foot points of the electric arc on the inner surface of the hollow channel of the anode.

In this context and at each further occurrence in the present invention, the term "plasmaeous plasma gas" refers to a gas which is present in a plasma state. A gas which is merely intended to be introduced and/or treated in a reactor for generating a thermal plasma by means of an electric arc, but which is not or not yet present in a plasma state does not fall under the definition of a plasmaeous plasma gas. A gas which exits a reactor for generating a thermal plasma by means of an electric arc and is not or no longer present in a plasma state does, likewise, not fall under the definition of a plasmaeous plasma gas.

According to A. Fridman (Plasma Chemistry, Cambridge University Press, 2009), a gas which is present in a plasma state is generally defined as an ionized gas, i.e. a gas containing at least one electron which is not bound to an atom or molecule, converting the atoms or molecules into positively charged ions. Preferably, a gas which is present in a plasma state contains electrically charged particles in an amount which is sufficient to affect and change its electrical properties and behavior relative to the normal gas state. An example of an electrical property is the electrical conductivity. The electrical conductivity is increased in the plasma state of a gas, especially in the plasma state which is adopted at elevated temperatures. Conceptually, the correlation of the electrical conductivity with the plasma state and the temperature of a gas may be explained as follows: It is known that the degree of ionization increases with temperature (for example shown by tabulated data for hydrogen, nitrogen, oxygen, air and selected noble gases in M. I. Boulos, Thermal Plasmas, Fundamentals and Applications, Vol. 1, 1994). Due to the enhanced mobility of opposite charges, an increased degree of ionization then also comes along with an increased electrical conductivity.

Moreover, a plasmaeous plasma gas in the sense of the current invention is preferably characterized by the fact that the electrical conductivity of the respective plasmaeous plasma gas at a given density is at least 1 order of magnitude, preferably 2 orders of magnitude, even more preferably 4 orders of magnitude higher than the electrical conductivity of the corresponding gas at room temperature and the same density .

Whereas non-plasma state gases at room temperature (i.e. without external electrical or other excitation) have electrical conductivities below 10-22 S/m, a gas in a plasmaeous state according to the present invention is characterized by an electrical conductivity of at least 10-21 S/m, preferably at least 10-20 S/m, even more preferably at least 10-18 S/m.

In this context, the skilled person can measure the electrical conductivity of a gas by a technique which is analogous to the flame ionization detection method.

A gas which is present in a plasma state is preferably generated by the use of electrical energy, for example by subjecting a gas to a strong electromagnetic field, for example an electromagnetic field which is generated in the surrounding of an electric arc.

A plasmaeous plasma gas, i.e. a gas present in a plasma state, can at least be encountered at one point of a flow cross-section transverse to the flow direction of the main stream in the current reactor.

This plasma reactor design allows for an enhanced control of temperature and concentration profiles, mean residence times, residence time distributions. Furthermore, it ensures that the compounds are homogeneously mixed. The formation of undesired by-products is suppressed widely.

Preferably, the anode which is comprised by the plasma reactor has a cylindrical shape having a coaxial hollow channel. In preferred embodiments, the anode and/or the cathode are cooled electrodes, wherein the cooling is preferably liquid cooling, more preferably water cooling. This ensures reduced erosion and long-lasting operation of the electrodes. In further embodiments, the anode and/or the cathode are made of materials comprising less than 10 wt. % of graphite or other solid carbon materials. However, graphite or solid carbon-based electrodes typically exhibit higher deterioration rates and require higher investment costs than metal-based electrodes. Accordingly, in preferred embodiments the anode and the cathode of the reactor are metal electrodes.

In further embodiments, the anode and cathode are concentric and also the cathode has a hollow channel with the main axis extending along the flow direction of the main stream, wherein the hollow channel has two opposing ends, wherein the end facing into the direction opposite to the flow direction of the main stream is closed and wherein the end facing into the flow direction of the main stream of the plasma gas is open. Preferably, this open end facing into the flow direction of the main stream of the plasma gas is positioned upstream and concentric to the open end of the anode facing into the direction opposite to the flow direction of the main stream. The term "closed" in the context of the end of the hollow channel of the cathode facing into the direction opposite to the flow direction of the main stream means that the end of the channel is completely closed or that the flow cross-section transverse to the flow direction of the main stream is reduced by at least 90 % based on the area of the flow cross-section in comparison with the average flow cross-section of the cathode transverse to the flow direction of the main stream in the range of the foot points of the electric arc on the inner surface of the hollow channel of the cathode.

In these embodiments, the anode and cathode are arranged such that the foot points of the electric arc contact the inner surface of the cathode and the inner surface of the anode, respectively. In preferred embodiments, the anode and the cathode are arranged such that there is a gap in the direction of the main stream between the end of the cathode facing into the flow direction of the main stream and the end of the anode facing into the direction opposite to the flow direction of the main stream. The length of said gap is preferably at least 0.3, more preferably at least 0.5, times the average inner diameter of the hollow channel of the anode in the range of the foot points of the electric arc on the inner surface of the hollow channel of the anode. In some embodiments, the at least one first feed line is arranged such that the plasma gas is introduced into the plasma section of the reactor via the gap between the anode and cathode.

Shape and location of foot points of electric arcs on the cathode and/or on the anode typically vary over time during operation, not only during ramp-up, shut down and load changes, but also during steady state operation. Especially, in case of anodes having a hollow channel and wherein the foot points of the electric arc are on the inner surface of the hollow channel of the anode, the location of the foot points may vary over time and even in steady state operation both along the perimeter of the anode but also at least to a finite extent upwards and downwards in the flow direction of the main stream. The range of the locations of foot points on the inner surface of the hollow channel of the anode in the flow direction of the main stream typically depends on the current mode of operation. For example, if all other process parameters are kept constant, an increase in electrical load results in an elongation of the electric arc and hence in a shift of the range of locations of foot points on the inner surface of the hollow channel of the anode to an area on the surface of the hollow channel of the anode more downstream in the flow direction of the main stream. In the context of the present invention, with respect to the inner surface of the hollow channel of the anode, the term foot points refers to the location of the foot points which is most downstream under all continuous reactor operation modes. The most extended reach of foot points can for example be identified upon revision of an anode after operation based on an analysis of the material erosion on the inner surface of the hollow channel of the anode. The material erosion is namely higher at the part of the inner surface which is contacted by the foot points compared to surface sections which the arc has not reached during operation. The foot points define an area in which the electric arc contacts the anode. Likewise, the area where foot points are located on the inner surface of a hollow channel of a cathode during operation may be identified upon revision after operation.

The term anode, as used for the purpose of the definition of the present invention, is understood narrowly. The anode stretches down to the beginning of the second reactor section which is identical to the beginning of the first subsection of the second reactor section, i.e., the position of the at least one second feed line along the flow direction of the main stream, even though parts beyond the beginning of the first subsection of the second reactor section may have the same electrical potential as the anode. Other parts of the plasma section, e.g., a magnetic device or a device for fluid-dynamically inducing swirling of the plasma gas, do not belong to the anode as defined according to the present invention, even though they may have the same electric potential as the anode. Accordingly, in some embodiments the flow cross-section transverse to the flow direction of the main stream of the reactor at the open end of the anode facing into the flow direction of the main stream, or at the position at which the foot points of the electric arc contact the inner surface of the hollow channel of the anode does not change along the length of the anode and/or the transition from the anode to the second reactor section. In other words, the flow cross-section transverse to the flow direction of the main stream may essentially stay the same in the anode and at the transition from the anode to the second reactor section. Hence, in certain embodiments the flow cross-section at the open end of the anode opposite to the flow direction of the main stream transverse to the flow direction of the main stream may essentially be the same as the flow cross-section transverse to the flow direction of the main stream at the beginning of the first subsection of the second reactor section.

In preferred embodiments, the reactor comprises at least one sudden expansion which is positioned between the foot points of the electric arc on the inner surface of the hollow channel of the anode and the most upstream point in the flow direction of the main stream at which the flow cross-section transverse to the flow direction of the main stream is greater by at least a factor of 5, preferably a factor of 10, in comparison with the average flow cross-section of the anode transverse to the flow direction of the main stream in the range of the foot points of the electric arc on the inner surface of the hollow channel of the anode. The sudden expansion is a sudden expansion of the flow cross-section transverse to the flow direction of the main stream which has an opening angle of at least 20 °, preferably at least 45 °, more preferred at least 75 °, into the flow direction of the main stream relative to the main stream axis. This reactor configuration helps to mix the C₁- to C₄-alkane-containing gas which is introduced into the reactor via the at least one second feed line and the plasmaeous plasma gas and to broaden the residence time distribution of the atoms of the mixture. Especially, the sudden expansion improves backmixing of a portion of solid particles rich in carbon whose surfaces have a catalytic impact on decomposition of hydrocarbons and which may grow to a larger size through backmixing. Also, further means like means for the induction of turbulence and/or backmixing may broaden the residence time distribution and further improve the device and the process of the present invention. Hence, in some embodiments the second reactor section comprises at least one additional device for inducing additional turbulence and/or backmixing of the mixture, preferably being positioned downstream of the at least one second feed line in the flow direction of the main stream. In some embodiments, the at least one additional device is positioned downstream of the most upstream point in the flow direction of the main stream at which the flow cross-section transverse to the flow direction of the main stream is greater by at least a factor of 5, preferably by at least a factor of 10, in comparison with the average flow cross-section of the anode transverse to the flow direction of the main stream in the range of the foot points of the electric arc on the inner surface of the hollow channel of the anode. In these embodiments, the at least one additional device may be positioned downstream of the at least one second feed line in the flow direction of the main stream. The at least one additional device for inducing turbulence and/or backmixing of the mixture may be selected from the group consisting of a passive grid, a static mixer, a bend of the reactor, and combinations thereof, wherein preferably the bend of the reactor induces a change of the flow direction of the mixture relative to the flow direction of the main stream by at least 80 °, preferably at least 135 °. In certain embodiments of the present invention, the reactor comprises two or more sudden expansions, preferably in the second reactor section, more preferably in the first and/or second subsection of the second reactor section.

In preferred embodiments, at least 5 % of the atoms of the mixture resulting from the plasmaeous plasma gas leaving the plasma section and the C₁- to C₄-alkane-containing gas of the at least one second feed line have a residence time in the second reactor section which deviates in absolute numbers by at least 5 % from the mean residence time of all atoms of the mixture resulting from the plasmaeous plasma gas leaving the plasma section and the C₁- to C₄-alkane-containing gas of the at least one second feed line in the second reactor section.

The residence time, the mean residence time, and the residence time distribution in the second reactor section, if not specified otherwise, refers to the residence time, the mean residence time, and the residence time distribution in the total second reactor section.

The term "in absolute numbers by at least 5 % deviation from the mean residence time" means that the corresponding atoms have a residence time of up to 95 % or 105 % and more relative to the mean residence time.

Preferably, at least 10 % of the atoms of the mixture resulting from the plasmaeous plasma gas leaving the plasma section and the C₁- to C₄-alkane-containing gas of the at least one second feed line have a residence time in the second reactor section which deviates in absolute numbers by at least 10 % from the mean residence time of all atoms of the mixture resulting from the plasmaeous plasma gas leaving the plasma section and the C₁- to C₄-alkane-containing gas of the at least one second feed line in the second reactor section, more preferred by at least 15 %, even more preferred by at least 20 %, from the mean residence time of all atoms of the mixture resulting from the plasmaeous plasma gas leaving the plasma section and the C₁- to C₄-alkane-containing gas of the at least one second feed line in the second reactor section.

In further embodiments, the flow cross-section transverse to the flow direction of the main stream in the range from the foot points of the electric arc on the inner surface of the hollow channel of the anode down to the most upstream point in the flow direction of the main stream at which the flow cross-section transverse to the flow direction of the main stream is greater by at least a factor of 5, preferably a factor of 10, in comparison with the average flow cross-section of the anode transverse to the flow direction of the main stream in the range of the foot points of the electric arc on the inner surface of the hollow channel of the anode is at any point at least 60 %, preferably at least 80 %, more preferred at least 90 %, relative to the average flow cross-section transverse to the flow direction of the main stream at the foot points of the electric arc on the inner surface of the hollow channel of the anode. This ensures that there is, if at all, only a limited reduction of the flow cross-section between the foot points of the electric arc on the inner surface of the hollow channel of the anode and the point at which the flow cross-section transverse to the flow direction of the main stream is enlarged. This prevents an undesired pressure drop and material stress in this zone of the reactor.

If the device for the production of hydrogen and solid carbon includes a heat exchanger, the heat exchanger may receive heat from the mixture leaving the plasma reactor. Hence, in certain embodiments the outlet means of the second reactor section are connected with a heat exchanger. Alternatively, the heat exchanger may receive heat from steam or by at least one burner. Preferably, the burner is fueled using fuel which contains a portion of the hydrogen that was previously produced in the reactor of the device of the present invention.

In another aspect, the current invention relates to a method for operating the outlined facility. The method is characterized in that the controller receives a value corresponding to an information with respect to the power in the external power grid as an input and outputs, according to a first mode (i), a command for running the power plant unit at a high load and for shutting down the device for the production of hydrogen and solid carbon; or according to a second mode (ii), a command for running the device or the production of hydrogen and solid carbon at a high load and for shutting down the power plant unit; or according to a third mode (iii), a command for running the device for the production of hydrogen and solid carbon and the power plant unit at high loads.

The meaning of the term "high load" has already been explained in the context of the facility and the configuration of the controller. The command for shutting down/to shut down has also been outlined before.

In a preferred embodiment of the method, the controller operates according to mode iii), if the value is within a predefined tolerance range relative to a reference value, or according to mode i) or mode ii), if the value is above or below the tolerance range relative to the reference value respectively.

Hence, operation mode iii) may be regarded as a kind of default operation mode of the facility. A change from the default operation mode to another operation mode is only permitted, if the value or combinations thereof corresponding to an information with respect to the power in the external power grid deviates from a reference value by more than a predefined difference. The difference may be set independently for each of a positive deviation from the reference value and a negative deviation from the reference value. In each case, the difference should be defined in such a way that the operation of the facility does not become too sensible to small deviations of the current value from the reference value. However, the difference must not be set too high in order to make sure that an operation mode which is unfavorable, e.g. in terms of the overall CO₂ footprint, may be avoided and instead a more favorable operation mode is achieved.

The value which is received by the controller may be a value corresponding to a current information with respect to the power in the external power grid or a value corresponding to a predicted information with respect to the power in the external power grid for a period of time in the near-term future.

The predefined difference may preferably be determined and adapted in discrete steps or continuously under real conditions. A corresponding determination method may include monitoring the value corresponding to a current information with respect to the power in the external power grid over a certain period of time, especially considering patterns over the course of days and/or weeks and/or years and/or dependent on the current and prognosed power production mix, especially the share of renewable power generation such as from wind and PV plants. Based on the observed courses of values, the predefined differences may be computed dependent on, for example, the time of the day and/or the week and/or the year and/or dependent on the current and/or prognosed mix of power generation and a tolerance range may be derived from those differences. Alternatively, a default value may be set as a predefined difference. This default value may, for instance, be ±30%, preferably ±20%, more preferably ±10%, even more preferably ±5% of the bandwidth of potential values corresponding to a current information with respect to the power in the external power grid.

In one embodiment, the inlet of the power plant unit is supplied with a fuel gas comprising or consisting of natural gas or a mixture comprising or consisting of natural gas and hydrogen containing gas. The hydrogen containing gas is preferably supplied from a first and/or a second gas outlet of the device for the production of hydrogen and solid carbon. The hydrogen share in the fuel gas may be adjusted by determining the ratio of the streams, for example to 0.5-100 vol.-%, more preferably 40-80 vol.-%, even more preferably 50-70 vol.-%. Further preferred hydrogen shares in the fuel gas are 1-25 vol.-% or 1-20 vol.-%.

Moreover, the fuel gas may further be mixed with air before entry of the combustion chamber. The mixing ratio depends on the specifications of the power plant unit and may be adapted by the skilled person according to the standards in the power plant technology.

Preferably, depending on the value corresponding to an information with respect to the power in the external power grid and the reference value, there are times in which the thermal plasma generator which is comprised in the device for the production of hydrogen and solid carbon is driven with power from an external power grid and times in which the thermal plasma generator is driven with the electrical power produced by the power plant unit of the present invention. For example, if the power from the external power grid has a too high CO₂ footprint, for instance higher than the power plant unit according to the present invention, the thermal plasma generator is preferably driven with power from the power plant unit of the inventive facility. In cases in which the external power is, to a sufficiently large extent, based on renewable energy sources, it is, however, beneficial to switch the powering mode of the thermal plasma generator and to drive it with power from an external power grid.

Exhaust heat which is generated in the device for the production of hydrogen and solid carbon may find application in other fields: If the facility is located in a densely populated area, it is, for example, preferred, when the exhaust heat or a portion of it is supplied to a district heating grid, particularly in winter time. Another possibility, which is especially beneficial during summer time and/or if the facility is part of a large industrial park, is to provide the exhaust heat or a portion of it to an industrial process. In case the power plant of the facility comprises a steam turbine, the exhaust heat or a portion of it may also be supplied to the steam turbine. In one embodiment, two or more applications of exhaust heat such as described above are combined simultaneously. As the load of the device for the production of hydrogen and solid carbon may vary over time, also the amount and/or the application for which the heat is used may vary. In a preferred embodiment, the amount and/or application for which the heat is used may vary even at constant load of the device for the production of hydrogen and solid carbon.

In the above context, the "exhaust heat" is the excess thermal energy which is generated in the device for the production of hydrogen and solid carbon. In other words, the thermal energy is the process heat which is not utilised for a reaction or a process within the device for the production of hydrogen and solid carbon.

The nature of the present invention will become more clearly apparent and better to be understood in view of the accompanying examples and drawings. The examples and drawings should, however, in no way limit the scope of the invention.

The drawings illustrate the following:
Figure 1 is a device and flow diagram showing the interaction between the power plant unit and the device for the production of hydrogen and solid carbon in the facility according to the present invention.
Figures 2-4 are schemes illustrating the operation of the power plant unit and the device for the production of hydrogen and solid carbon in the facility according to the present invention.
Figure 5 shows three different operation modes of the facility in a simplified representation.

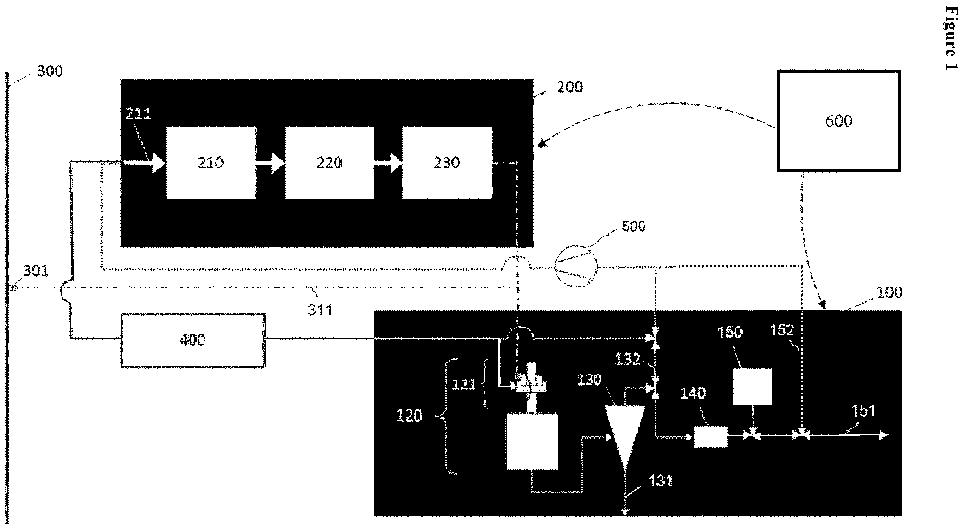

Fig. 1 shows a reservoir 400 for a C₁- to C₄-alkane-containing gas which is connected to a power plant unit 200 and a device for the production of hydrogen and solid carbon 100. The reservoir 400 may either be an external storage tank or a natural feedstock of the C₁-to C₄-alkane-containing gas, preferably, it is a natural gas grid.

The flow diagram further indicates the presence of an external power grid 300. The grid 300 is connected to the device for the production of hydrogen and solid carbon 100 in order to supply power to the plasma reactor 120 via power line 311, especially to the plasma section 121. However, the external grid 300 is also connected to the power plant unit 200. This electrical connection allows to feed electrical energy from the generator 230 to the external grid. A grid connector 301 and an optional transformer (not shown) enable the electrical connections between the external grid 300 and the unit 200 and/or the device 100, respectively.

In a first operation mode i) of the facility, the power plant 200 is run and the device 100 is shut down. In this operation mode, the power plant 200 may be run with hydrogen that is fed from the storage tank 150 or with a mix of this hydrogen and natural gas from the reservoir 400. The power which is produced is preferably fed into the external grid via power line 311. In a second operation mode ii), the device 100, i.e. the plasma section 121 of the plasma reactor 120, is supplied with power from the external grid 300 via the power line 311, while the power plant is shut down. In a third operation mode iii), the power plant 200 and the device 100 are running. The power plant unit 200 does either not feed any power to the external power grid 300 or it only supplies a part of the produced power to the external grid 300. The remainder is preferably used to run the device 100.

Which of these abovementioned operation modes is selected, is determined by the controller 600 and depends on an information with respect to the power in the external power grid 300.

In any case, if the plasma reactor 120 is operated, it produces a stream which contains significant amounts of hydrogen and solid carbon, especially carbon black. This stream is supplied to the device 130 for separating solid carbon from hydrogen in order to obtain an outlet stream with reduced amount of solid carbon and a solid outlet stream 131. The solid content in the outlet stream with reduced amount of solid carbon is less than 1.0 wt.-%. The stream with reduced amount of solid carbon may then be divided into a first outlet stream 132 which leaves the device 100 (indicated as a dotted line) and a second stream which is supplied to a device for enrichment of hydrogen 140. The device 140 may be a PSA-unit, i.e. it may comprise at least two adsorber beds (not shown) and serves to create a stream with higher purity in hydrogen. The H₂-enriched outlet stream of device 140 may be split into two streams by a first three-way valve. One stream may be fed into a storage tank 150. The other stream flows to a second three-way valve. At the second three-way valve the stream is split again, namely into an outlet stream 151 which provides an end consumer with H₂ and a stream 152 which is connected to at least one compression stage 500. The splitting ratios may be controlled by appropriate adjustment of the three-way valves.

The first outlet stream 132 and the second outlet stream 152 may be united upstream of at least one compression stage 500 as shown in figure 1. The compression stage 500 may be needed in order to increase the gas pressure to a pressure which is suitable for the combustor 210 of the power plant unit 200. The power plant unit 200 may be further supplied with natural gas from the reservoir 400 so that the inlet stream 211 can contain a broad range of Hz concentrations, e.g. 20 vol.-% H₂ and 80 vol.-% natural gas. The combustor 210 is specifically designed to handle these high shares of hydrogen and the turbine 220 is designed and made from materials as well as operated such that it withstands potentially high temperatures that may be due to the combustion of hydrogen.

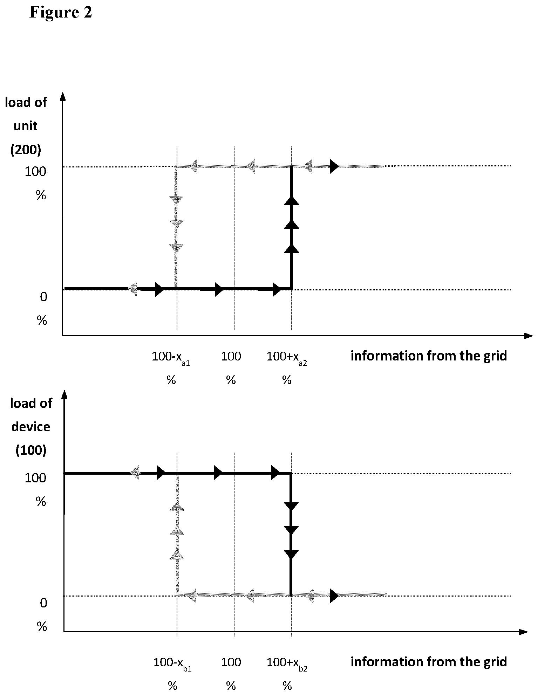

Fig. 2 shows two diagrams, the upper one depicts the operation state of the power plant unit 200 and the lower one depicts the operation state of the device for the production of hydrogen and solid carbon 100. In both diagrams the load is plotted against the information with respect to a power produced in the external power grid ("information from the grid"). As can easily be derived from the labeling of the y-axis, the load may vary from 0% to 100%. The x-axis with the information from the grid is divided into three ranges: The first range covers values up to a specific reference value minus a first predefined difference, i.e. up to the value x_{Refb}-x_{b1} or x_{Refa}-xₐ₁, respectively. The second range is composed of the predefined differences around the respective reference values, x_{Refa} and x_{Refb}. The lower boundary of the tolerance range is x_{Refb}-x_{b1} or x_{Refa}-xₐ₁, respectively, and the upper boundary is x_{Refb}+x_{b2} and x_{Refa}+xₐ₂, respectively. The third range covers values starting from a specific reference value plus a second predefined difference upwards, i.e. from the value of x_{Refb}+x_{b2} or x_{Refa}+xₐ₂ upwards, respectively. The reference values and the predefined differences which define the operation ranges may be equal for the power plant unit 200 and the device 100 respectively, i.e. x_{Refb} = x_{Refa} and x_{b2} = xₐ₂ and x_{b1} = xₐ₁, or they may be different.

As can be seen from the arrows, in a preferred operation mode, the controller may be designed in such a way that the operation exhibits a hysteresis resulting in two valid operation states within the ranges of the predefined differences around the respective reference values. If, for example, the power plant unit 200 has been operated immediately before in a state in which it has been shut down (first range on the left-hand side of the upper diagram), it will remain in this state as long as the value for the information from the grid stays below the upper boundary to the third range on the right-hand side of the upper diagram (x_{Refa}+xₐ₂). Only if the value for the information from the grid exceeds the threshold value to the third range (x_{Refa}+xₐ₂), the power plant unit will receive a command from the controller 600 to change its operation state and to operate at high load (here: at 100 %). On the other hand, if the power plant unit 200 has been operated immediately before at high load (here: at 100 %) and the value corresponding to an information from the external grid decreases below the upper boundary to the third range on the right-hand side of the upper diagram (x_{Refa}+xₐ₂), the power plant unit will be further operated at high load (here: at 100 %). It will only be shut down, if the value for the information from the external grid decreases below x_{Refa}-xₐ₁. Likewise, operation principles apply to the device 100 with the difference that it is operated preferably at low values for the information from the grid and is shut down at high values for the information of the grid.

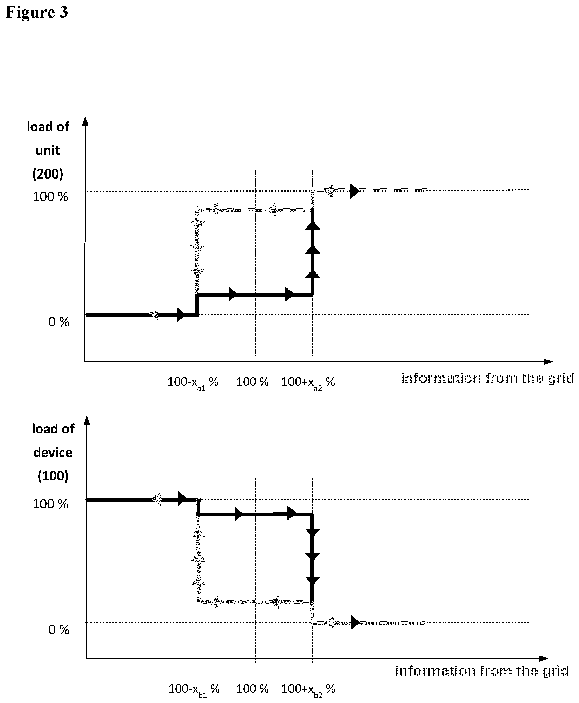

Fig. 3 illustrates that within the ranges of predefined differences around the specific reference values (i.e., from x_{Refa}-xₐ₂ to x_{Refa}+xₐ₂ and from x_{Refb}-x_{b2} to x_{Refb}+x_{b2} respectively) the loads may be different from the loads outside of this range (here: 100 % and 0 % load respectively). For example, within the ranges of predefined differences around the specific reference values (i.e., from x_{Refa}-xₐ₂ to x_{Refa}+xₐ₂ and from x_{Refb}-x_{b2} to x_{Refb}+x_{b2} respectively) the unit 200 and the device 100 may be run at about 15% of the full load and at about 85% of the full load, depending on the previous operation state.

Besides the constant load operation states shown in figures 2 and 3 it is, of course, also possible to operate the power plant unit 200 and the device 100 with linearly or otherwise monotonically decreasing or increasing load ramps. This may be the case within the ranges of predefined differences around the specific reference values and/or within the ranges that cover values up to a specific reference value minus a predefined difference (x_{Refb}-x_{b1} or x_{Refa}-xₐ₁) and or within the ranges that cover values starting from a specific reference value plus a predefined difference (x_{Refb}+x_{b2} or x_{Refa}+xₐ₂) upwards. Likewise, non-linear load profiles may be used within these ranges without departing from the scope of the present invention.

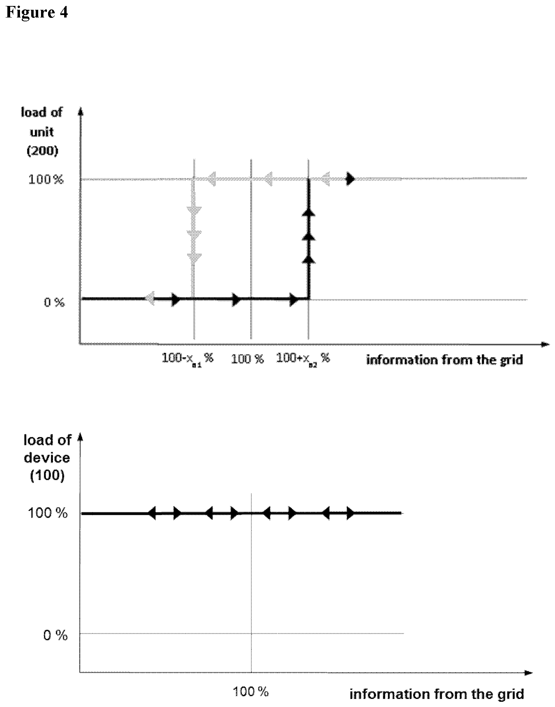

In fig. 4 the device 100 is continuously operated at full load, whereas the load of the unit 200 depends on the information with respect to power in the external power grid as outlined above for figure 2. In times in which the power plant unit 200 is shut down, the device 100 is operated with power from an external grid (e.g. in times of high share of renewable electricity production).

In the embodiments illustrated in fig. 2-4 the values for xₐ₁, xₐ₂, x_{b1} and x_{b2} may be specified separately over time dependent on the prognosis of the value corresponding to an information with respect to a power in an external power grid for the upcoming period of time and the certainty of this prognosis, e.g., the forecast of power fed into the external by wind and PV power installations and/or the demand of electricity from the external grid by other actors. Parameters determining the values for xₐ₁, xₐ₂, x_{b1} and x_{b2} are, among others, the foreseeable duration of upcoming time over which the value corresponding to an information with respect to a power in an external power grid will stay above or below a specific value, the certainty of the prognosis (i.e., the more uncertain the prognosis, the higher the necessary difference of the parameters to the specific value) and the external demand to operate the power plant (e.g., when the power plant unit is a combined heat and power production plant and there is a request for heat).

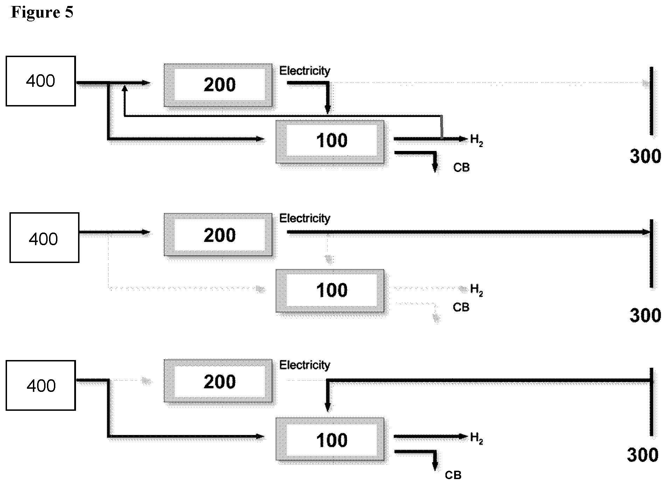

Fig. 5 highlights further options to differentiate the operation modes of the inventive facility. For this purpose, the power plant unit 200 and the device for production of hydrogen and solid carbon 100 are represented by single boxes, respectively. According to the uppermost case, the power plant unit 200 is supplied with a C₁- to C₄-alkane-containing gas from an external reservoir 400. The electricity which is generated is used only to run the device for production of hydrogen and solid carbon 100. At least a portion of the hydrogen H₂ which is produced by the device 100 from an the C₁- to C₄-alkane-containing input stream may be fed back and mixed with the C₁- to C₄-alkane-containing gas in order to obtain fuel gas for the power plant unit 200. Solid carbon (carbon black, CB) can be used elsewhere, e.g. in the printing industry, or it can be sequestered. The illustration in the middle of figure 5 shows an operation mode in which the device 100 is shut down completely and the power, which has been generated by the power plant unit 200, is fed into the external grid 300. In the scheme at the bottom of figure 5 the power plant unit 200 is shut down completely. The device 100 is powered with power from the external power grid 300. The produced hydrogen is stored (not shown in the diagram) or distributed according to the consumer's needs.

### EXAMPLES

The following calculations exemplify the method according to which the carbon footprint of the process is determined within the context of this application. The carbon footprints which are associated with the combustion of methane (R1) and the production of hydrogen by steam methane reforming (R2) have been calculated as reference values. Furthermore, the carbon footprints which are associated with the operation of some inventive and some comparative facilities (E1, E2, E3, C1, C2, C3) have been calculated. The assumptions that have been made for the calculations are outlined below. The results are summarized in table 1.

### Comparative Example 1 (C1)

The facility according to comparative example 1 is a combination comprising an electrolysis unit (producing 1.00 MJ_{LHV} hydrogen and a corresponding amount of oxygen) and a medium-efficient gas-fired power plant with an electrical efficiency η of 40% and besides no technical use of heat. According to the calculation, the electrolysis unit is exclusively operated with electricity that is produced in the gas fired power plant. At an efficiency of the electrolysis of 70 %, i.e., 0.70 MJ_{LHV} of hydrogen are produced per 1.00 MJ of electrical energy, the medium-efficient gas-fired power plant needs to output 1.43 MJ of electrical energy, i.e. 1.43 MJ of used energy, in order to obtain 1.00 MJ_{LHV} of hydrogen in the electrolysis unit. In order to provide this amount of energy, the medium-efficient gas-fired power plant consumes 3.57 MJ_{LHV} of methane. The carbon footprint associated with the operation of this facility consequently amounts to 196.4 g CO₂ per 1.00 MJ_{LHV} of hydrogen.

### Comparative Example 2 (C2)

The facility of comparative example 2 is identical to the facility of comparative example 1 except for the fact that an efficient combined cycle gas-fired power plant (η = 60%) is used instead of a medium-efficient gas-fired power plant (η = 40%). Again, no heat is co-produced for separate technical use. The efficient combined cycle gas-fired power plant only consumes 2.38 MJ_{LHV} of methane in order to produce 1.43 MJ of electrical energy, i.e. 1.43 MJ of used energy. Therefore, the carbon footprint associated with the operation of such a facility is computed to be 131.0 g CO₂ per 1.00 MJ_{LHV} of hydrogen

### Example 1 (E1)

The facility according to inventive example 1 is a combination comprising a gas splitting unit (producing 1.00 MJ_{LHV} hydrogen and 0.82 MJ carbon black) and a medium-efficient gas-fired power plant with an electrical efficiency η of 40% and besides no technical use of heat. According to the calculation, the gas splitting unit is exclusively operated with electricity that is produced in the gas fired power plant. In order to obtain 1.00 MJ_{LHV} of hydrogen in the gas splitting unit, the medium-efficient gas-fired power plant needs to output 0.50 MJ of electrical energy. In order to provide 0.50 MJ of electrical energy, i.e. 0.50 MJ of used energy, the medium-efficient gas-fired power plant consumes 1.25 MJ_{LHV} of methane. The carbon footprint associated with the operation of this facility consequently amounts to 68.8 g CO₂ per 1.00 MJ_{LHV} of hydrogen

### Example 2 (E2)

The facility of example 2 is identical to the facility of example 1 except for the fact that an efficient gas-fired power plant (η = 60%) is used instead of a medium-efficient gas-fired power plant (η = 40%). Again, no heat is co-produced for separate technical use. The efficient gas-fired power plant only consumes 0.83 MJ_{LHV} of methane in order to provide 0.50 MJ of electrical energy, i.e. 0.50 MJ of used energy. Therefore, the carbon footprint associated with the operation of such a facility is computed to be 45.8 g CO₂ per 1.00 MJ_{LHV} of hydrogen.

### Example 3 (E3)

The facility of example 3 is identical to the facility of example 1 except for the fact that the gas-fired power plant is operated in a combined heat and power production mode so that besides electrical energy, the power plant produces a significant amount of heat for technical use (e.g., for an industrial process). The electrical efficiency of this gas-fired power plant is 40 % (η_{electrical} = 40%) as is its thermal efficiency (ηₕₑₐₜ = 40%). This gas-fired power plant only consumes 1.25 MJ_{LHV} of methane per 1.00 MJ_{used}, i.e per sum of electrical and heat energy used (0.5 MJ_{electrical} + 0.5 MJₕₑₐₜ). Therefore, the carbon footprint associated with the electrical power generated is 66.8 g CO2 per MJ_{used}. Furthermore, the carbon footprint of the hydrogen produced by the gas splitting upon operation by electricity from the gas-fired power plant is computed to be 33.4 g CO₂ per 1.00 MJ_{LHV} of hydrogen.

### Comparative Example 3 (C3)

Another comparative example concerns the operation of a facility according to example 1 in which the medium-efficient gas-fired power plant (η = 40%) is replaced by an inefficient gas-fired power plant (η = 25%). The inefficient power plant unit consumes 2.00 MJ_{LHV} methane in order to provide 0.50 MJ of electrical energy, i.e. 0.50 MJ_{used}, for the operation of the gas splitting unit. This results in a carbon footprint of 110.0 g CO₂ per 1.00 MJ_{LHV} of hydrogen.

### Reference 1 (R1)

One carbon footprint which can be considered as a reference value in cases of providing heat is 55.0 g CO₂. This carbon footprint is associated with the combustion of 1.00 MJ_{LHV} of methane for the production of 1.00 MJ of thermal energy. Natural gas, typically high amounts of methane is standard and thus reference for many applications where process heat is needed.

### Reference 2 (R2)

Another reference carbon footprint is the amount of CO₂ which is formed in a conventional plant to produce hydrogen, i.e. a steam methane reforming unit (SMR). In order to obtain 1.00 MJ_{LHV} of hydrogen, the SMR needs a methane input feed of 1.31 MJ_{LHV} of methane. Simultaneously, 72.1 g CO₂ are emitted by the SMR.

**Table 1: Carbon footprints associated with the operation of the different facilities and their comparison to the reference values.**

| **Facility** | **Carbon footprint of process (in g_{CO2}/1.00 MJ_{LHV})** | **Carbon footprint of power plant (in g_{CO2}/1.00 MJₑₗ)** | **Required amount of Electricity (in MJₑₗ^{/}MJ_{H2})** |
|---|---|---|---|
| **C1** | 196.4 | 137.5 | 1.43 |
| **C2** | 131.0 | 91.6 | 1.43 |
| **E1** | 68.8 | 137.5 | 0.5 |
| **E2** | 45.8 | 91.6 | 0.5 |
| **E3** | 34.4 | 68.8 | 0.5 |
| **C3** | 110.0 | 220 | 0.5 |
| **R1** | 55.0 | | |
| **R2** | 72.1 | | |

## Claims

1. Facility with controllable power production and consumption comprising
a) at least one device (100) for the production of hydrogen and solid carbon from a C₁- to C₄-alkane-containing gas by use of electric energy which includes at least one device (130) for separating solid carbon from hydrogen,
b) a power plant unit (200) with a carbon footprint from 0 to 600 g_{CO2}/kWh_{used}, and
c) a controller (600) configured to output a command which determines the operation state of the device (100) for the production of hydrogen and solid carbon and the power plant unit (200) depending on an information with respect to a power in an external power grid (300),
wherein the power plant unit (200) is a gas-fired power plant or a gas-fired combined cycle power plant.

2. Facility according to claim 1, wherein the power plant unit (200) has a carbon footprint from 0 to 500 g_{CO2}/kWh_{used}, more preferably from 0 to 450 g_{CO2}/kWh_{used}, even more preferably from 0 to 400 g_{CO2}/kWh_{used}, most preferably from 0 to 350 g_{CO2}/kWh_{used}.

3. Facility according to one of the preceding claims, wherein the device (100) for the production of hydrogen and solid carbon further includes at least one of
• a plasma reactor (120),
• a device for enrichment of hydrogen (140),
• at least one heat exchanger, and
• a storage tank (150) for at least temporarily storing hydrogen;
wherein the plasma reactor (120) preferably comprises a thermal plasma generator (121).

4. Facility according to one of the preceding claims, wherein the device (100) for the production of hydrogen and solid carbon further includes at least one of a first gas outlet (132) and a second gas outlet (152),
wherein the first gas outlet (132) and/or the second gas outlet (152) are connected to a fuel gas inlet (211) of the power plant unit (200), preferably with at least one intermediate compression stage (500).

5. Facility according to one of the preceding claims, wherein the facility further comprises means for powering the device (100) for the production of hydrogen and solid carbon with power from the external power grid (300), electrical power from said power plant unit (200) or a mix of the aforementioned power types,
wherein the means preferably comprise at least one of a grid connector (301) and a transformer.

6. Facility according to one of the preceding claims, wherein the controller (600) is further configured to run the at least one device (100) for the production of hydrogen and solid carbon and the power plant unit (200) in such a way that the sum of full load hours of the respective plants is not more than 15,000 full load hours per year, preferably not more than 14,000 full load hours per year, even more preferably not more than 13,000 full load hours per year, most preferably not more than 12,000 full load hours per year.

7. Facility according to one of the preceding claims, wherein the controller (600) is further configured to run the power plant unit (200)
for at least 250 full load hours per year during times at which the at least one device (100) for the production of hydrogen and solid carbon runs at not more than 50 % of its design capacity, in particular at 0 % of its design capacity,
preferably for at least 500 full load hours per year during times at which the at least one device (100) for the production of hydrogen and solid carbon runs at not more than 50 % of its design capacity, in particular at 0 % of its design capacity,
more preferably for at least 750 full load hours per year during times at which the at least one device (100) for the production of hydrogen and solid carbon runs at not more than 50 %, of its design capacity, in particular at 0 % of its design capacity,
even more preferably for at least 1,000 full load hours per year during times at which the at least one device (100) for the production of hydrogen and solid carbon runs at not more than 50 % of its design capacity, in particular at 0 % of its design capacity,
most preferably for at least 1,500 full load hours per year during times at which the at least one device (100) for the production of hydrogen and solid carbon runs at not more than 50 % of its design capacity, in particular at 0 % of its design capacity.

8. Facility according to one of claims 1 to 6,
wherein the controller (600) is further configured to run the at least one device (100) for the production of hydrogen and solid carbon
for at least 250 full load hours per year during times at which the power plant unit (200) runs at not more than 50 % of its design capacity, in particular at 0 % of its design capacity,
preferably for at least 500 full load hours per year during times at which the power plant unit (200) runs at not more than 50 % of its design capacity, in particular at 0 % of its design capacity,
more preferably for at least 1,000 full load hours per year during times at which the power plant unit (200) runs at not more than 50 % of its design capacity, in particular at 0 % of its design capacity,
even more preferably for at least 1,500 full load hours per year during times at which the power plant unit (200) runs at not more than 50 % of its design capacity, in particular at 0 % of its design capacity,
most preferably for at least 2,000 full load hours per year during times at which the power plant unit (200) runs at not more than 50 % of its design capacity, in particular at 0 % of its design capacity.

9. Facility according to one of the preceding claims, wherein the controller (600) is configured to output
i) a command to run the power plant unit (200) at a high load and to shut down the device (100) for the production of hydrogen and solid carbon according to a first mode, or
ii) a command to run the device (100) for the production of hydrogen and solid carbon at a high load and to shut down the power plant unit (200) according to a second mode, or
iii) a command to run the device (100) for the production of hydrogen and solid carbon and the power plant unit (200) at high loads according to a third mode
wherein a high load corresponds to more than 50 % of the maximum load.

10. Facility according to one of the preceding claims, wherein the device (100) for the production of hydrogen and solid carbon includes a plasma reactor (120) which comprises
i) a plasma section comprising
• an anode and a cathode for generating an electric arc, the arc extending within the plasma section, and
• at least one first feed line for introducing a C₁- to C₄-alkane-containing plasma gas into the plasma section of the reactor,
• wherein the anode has a hollow channel along the flow direction of the main stream of the plasma gas which has an inner surface, an outlet in the flow direction of the main stream of the plasma gas which forms the open end of the anode in the flow direction of the main stream, and at least one inlet for receiving the C₁- to C₄-alkane-containing plasma gas introduced into the plasma section of the reactor via the at least one first feed line wherein the inlet forms the open end of the anode facing into the direction opposite to the flow direction of the main stream, and wherein the anode is configured such that the plasma gas flows through the hollow channel via the open end of the anode facing into the direction opposite to the flow direction of the main stream and the open end of the anode in the flow direction of the main stream, wherein the plasma gas contacts the inner surface of the hollow channel of the anode on its passage through the anode, and
• wherein said anode and said cathode are arranged so that the arc generated by them is formed in said plasma section to form a plasmaeous plasma gas in said plasma section from the C₁- to C₄-alkane-containing plasma gas introduced into said plasma section through said at least one first feed line, and wherein the foot points of the electric arc contacting the anode are located on the inner surface of the hollow channel of the anode, and
ii) a second reactor section directly downstream of the plasma section of the reactor in the flow direction of the main stream, the second reactor section comprising
• a first subsection and a second subsection, wherein the second subsection is directly downstream of the first subsection in the flow direction of the main stream, and
• outlet means for withdrawing components from the reactor, wherein the outlet means are located at the end of the second reactor section in the flow direction of the main stream, wherein
• the first subsection comprises at least one second feed line for introducing a C₁- to C₄-alkane-containing gas into the second reactor section, wherein
• the at least one second feed line is arranged such that the C₁- to C₄-alkane-containing gas which is introduced into the reactor via the at least one second feed line is introduced into the plasmaeous gas at a position downstream of the foot points of the electric arc in the flow direction of the main stream, so that in the first subsection of the second reactor section downstream of the at least one second feed line a mixture is formed from the plasmaeous plasma gas leaving the plasma section and the C₁- to C₄-alkane-containing gas of the at least one second feed line, and
• wherein the position of the at least one second feed line along the flow direction of the main stream defines the beginning of the second reactor section and of its first subsection, and
• wherein the volume of the plasma section which begins at the most upstream position at which the inner surface of the hollow channel of the anode is facing the electric arc and reaches down to the end of the plasma section of the reactor has a volume in the range of 0.0001 m³ to 0.4m³, preferably in the range of 0.001 to 0.2 m³, and defines a reference volume, and
• wherein the volume of the first subsection of the second reactor section is in the range of 10 to 200 times the reference volume, preferably in the range of 20 to 100 times the reference volume, and
• wherein the volume of the total second reactor section is in the range of 20 to 2000 times the reference volume, preferably in the range of 40 to 1000 times the reference volume, and
• wherein the reactor comprises in the first subsection of the second reactor section and/or in the plasma section in the range downstream in the flow direction of the main stream of the foot points of the electric arc on the inner surface of the hollow channel of the anode down to the end of the plasma section at least at one point a flow cross-section transverse to the flow direction of the main stream which is greater by at least a factor of 5, preferably by at least a factor of 10, in comparison with the average flow cross-section of the anode transverse to the flow direction of the main stream in the range of the foot points of the electric arc on the inner surface of the hollow channel of the anode.

11. Method for operating the facility of one of the preceding claims, wherein the controller (600) receives a value corresponding to an information with respect to the power in the external power grid (300) as an input and,
i) according to a first mode, outputs a command for running the power plant unit (200) at a high load and for shutting down the device (100) for the production of hydrogen and solid carbon; or
ii) according to a second mode, outputs a command for running the device (100) for the production of hydrogen and solid carbon at a high load and for shutting down the power plant unit (200); or
iii) according to a third mode, outputs a command for running the device (100) for the production of hydrogen and solid carbon and the power plant unit (200) at high loads
wherein a high load corresponds to more than 50 % of the maximum load.

12. Method according to claim 11,
wherein the controller (600) operates
according to mode iii), if the value is within a predefined tolerance range relative to a reference value, or
according to mode i) or mode ii), if the value is above or below the tolerance range relative to the reference value.

13. Method according to one of claims 11 and 12,
wherein an inlet (211) of the power plant unit (200) is supplied with a fuel gas comprising or consisting of natural gas or a mixture comprising or consisting of natural gas and hydrogen,
wherein hydrogen is preferably directly supplied from a first gas outlet (132) and/or a second gas outlet (152) of the device (100) for the production of hydrogen and solid carbon,
wherein the ratio of the hydrogen is preferably determined such that the hydrogen share in the fuel gas is 0.5-100 vol.-%, more preferably 1-25 vol.-%, most preferably 1-20 vol.-%.

14. Method according to one of claims 11 to 13, wherein a thermal plasma generator (121) which is comprised in the device (100) for the production of hydrogen and solid carbon is driven with power from the external power grid (300) or with electrical power produced by the power plant unit (200) or a mix of the aforementioned power types.

## Patentansprüche

1. Anlage mit steuerbarer Energieerzeugung und -verbrauch, umfassend
a) mindestens eine Vorrichtung (100) zur Erzeugung von Wasserstoff und festem Kohlenstoff aus einem C₁- bis C₄-alkanhaltigen Gas unter Verwendung von elektrischer Energie, die mindestens eine Vorrichtung (130) zur Abtrennung von festem Kohlenstoff aus Wasserstoff aufweist,
b) eine Energieerzeugungsanlageneinheit (200) mit einem CO₂-Fußabdruck von 0 bis 600 g_{CO2}/kWh_{genutzt}, und
c) eine Steuerung (600), die so konfiguriert ist, dass sie einen Befehl ausgibt, der den Betriebszustand der Vorrichtung (100) zur Erzeugung von Wasserstoff und festem Kohlenstoff und der Energieerzeugungs-anlageneinheit (200) in Abhängigkeit von einer Information in Bezug auf eine Energie in einem externen Stromnetz (300) bestimmt,
wobei die Energieerzeugungsanlageneinheit (200) eine gasbefeuerte Energieerzeugungsanlage oder eine gasbefeuerte Kombienergieerzeugungsanlage ist.

2. Anlage nach Anspruch 1, wobei die Energieerzeugungsanlageneinheit (200) einen CO₂-Fußabdruck von 0 bis 500 g_{CO2}/kWh_{genutzt}, bevorzugter von 0 bis 450 g_{CO2}/kWh_{genutzt}, noch bevorzugter von 0 bis 400 g_{CO2}/kWh_{genutzt}, besonders bevorzugt von 0 bis 350 g_{CO2}/kWh_{genutzt} aufweist.

3. Anlage nach einem der vorhergehenden Ansprüche, wobei die Vorrichtung (100) zur Erzeugung von Wasserstoff und festem Kohlenstoff weiter mindestens eines aufweist von
• einem Plasmareaktor (120),
• einer Vorrichtung zur Anreicherung von Wasserstoff (140),
• mindestens einem Wärmetauscher, und
• einem Speichertank (150) zur mindestens vorübergehenden Speicherung von Wasserstoff;
wobei der Plasmareaktor (120) vorzugsweise einen thermischen Plasmagenerator (121) umfasst.

4. Anlage nach einem der vorhergehenden Ansprüche, wobei die Vorrichtung (100) zur Erzeugung von Wasserstoff und festem Kohlenstoff weiter mindestens einen von einem ersten Gasauslass (132) und einem zweiten Gasauslass (152) aufweist,
wobei der erste Gasauslass (132) und/oder der zweite Gasauslass (152) mit einem Brenngaseinlass (211) der Energieerzeugungsanlageneinheit (200) verbunden ist, vorzugsweise mit mindestens einer Zwischenverdichtungsstufe (500).

5. Anlage nach einem der vorhergehenden Ansprüche, wobei die Anlage weiter Mittel zum Versorgen der Vorrichtung (100) zur Erzeugung von Wasserstoff und festem Kohlenstoff mit Energie aus dem externen Stromnetz (300), elektrischer Energie aus der Energieerzeugungsanlageneinheit (200) oder einem Mix der vorgenannten Energiearten umfasst,
wobei die Mittel vorzugsweise mindestens einen von einem Netzanschluss (301) und einem Transformator umfassen.

6. Anlage nach einem der vorhergehenden Ansprüche, wobei die Steuerung (600) weiter so konfiguriert ist, dass sie die mindestens eine Vorrichtung (100) zur Erzeugung von Wasserstoff und festem Kohlenstoff und die Energieerzeugungsanlageneinheit (200) so betreibt, dass die Summe der Volllaststunden der jeweiligen Anlagen nicht mehr als 15.000 Volllaststunden pro Jahr, vorzugsweise nicht mehr als 14.000 Volllaststunden pro Jahr, noch bevorzugter nicht mehr als 13.000 Volllaststunden pro Jahr, besonders bevorzugt nicht mehr als 12.000 Volllaststunden pro Jahr beträgt.

7. Anlage nach einem der vorhergehenden Ansprüche, wobei die Steuerung (600) weiter so konfiguriert ist, dass sie die Energieerzeugungsanlageneinheit (200) betreibt
für mindestens 250 Volllaststunden pro Jahr zu Zeiten, in denen die mindestens eine Vorrichtung (100) zur Erzeugung von Wasserstoff und festem Kohlenstoff mit nicht mehr als 50 % ihrer Auslegungskapazität, insbesondere mit 0 % ihrer Auslegungskapazität, betrieben wird,
vorzugsweise für mindestens 500 Volllaststunden pro Jahr zu Zeiten, in denen die mindestens eine Vorrichtung (100) zur Erzeugung von Wasserstoff und festem Kohlenstoff mit nicht mehr als 50 % ihrer Auslegungskapazität, insbesondere mit 0 % ihrer Auslegungskapazität, betrieben wird,
bevorzugter für mindestens 750 Volllaststunden pro Jahr zu Zeiten, in denen die mindestens eine Vorrichtung (100) zur Erzeugung von Wasserstoff und festem Kohlenstoff mit nicht mehr als 50 % ihrer Auslegungskapazität, insbesondere mit 0 % ihrer Auslegungskapazität, betrieben wird,
noch bevorzugter für mindestens 1.000 Volllaststunden pro Jahr zu Zeiten, in denen die mindestens eine Vorrichtung (100) zur Erzeugung von Wasserstoff und festem Kohlenstoff mit nicht mehr als 50 % ihrer Auslegungskapazität, insbesondere mit 0 % ihrer Auslegungskapazität, betrieben wird,
am meisten bevorzugt für mindestens 1.500 Volllaststunden pro Jahr zu Zeiten, in denen die mindestens eine Vorrichtung (100) zur Erzeugung von Wasserstoff und festem Kohlenstoff mit nicht mehr als 50 % ihrer Auslegungskapazität, insbesondere mit 0 % ihrer Auslegungskapazität, betrieben wird.

8. Anlage nach einem der Ansprüche 1 bis 6, wobei die Steuerung (600) weiter so konfiguriert ist, dass sie die mindestens eine Vorrichtung (100) zur Erzeugung von Wasserstoff und festem Kohlenstoff betreibt
für mindestens 250 Volllaststunden pro Jahr zu Zeiten, in denen die Energieerzeugungsanlageneinheit (200) mit nicht mehr als 50 % ihrer Auslegungskapazität, insbesondere mit 0 % ihrer Auslegungskapazität, betrieben wird,
vorzugsweise für mindestens 500 Volllaststunden pro Jahr zu Zeiten, in denen die Energieerzeugungsanlageneinheit (200) mit nicht mehr als 50 % ihrer Auslegungskapazität, insbesondere mit 0 % ihrer Auslegungskapazität, betrieben wird,
bevorzugter für mindestens 1.000 Volllaststunden pro Jahr zu Zeiten, in denen die Energieerzeugungsanlageneinheit (200) mit nicht mehr als 50 % ihrer Auslegungskapazität, insbesondere mit 0 % ihrer Auslegungskapazität, betrieben wird,
noch bevorzugter für mindestens 1.500 Volllaststunden pro Jahr zu Zeiten, in denen die Energieerzeugungsanlageneinheit (200) mit nicht mehr als 50 % ihrer Auslegungskapazität, insbesondere mit 0 % ihrer Auslegungskapazität, betrieben wird,
am meisten bevorzugt für mindestens 2.000 Volllaststunden pro Jahr zu Zeiten, in denen die Energieerzeugungsanlageneinheit (200) mit nicht mehr als 50 % ihrer Auslegungskapazität, insbesondere mit 0 % ihrer Auslegungskapazität, betrieben wird.

9. Anlage nach einem der vorhergehenden Ansprüche, wobei die Steuerung (600) so konfiguriert ist, dass sie ausgibt
i) einen Befehl zum Betreiben der Energieerzeugungsanlageneinheit (200) bei einer hohen Last und zum Abschalten der Vorrichtung (100) zur Erzeugung von Wasserstoff und festem Kohlenstoff nach einem ersten Modus, oder
ii) einen Befehl zum Betreiben der Vorrichtung (100) zur Erzeugung von Wasserstoff und festem Kohlenstoff bei einer hohen Last und zum Abschalten der Energieerzeugungsanlageneinheit (200) nach einem zweiten Modus, oder
iii) einen Befehl zum Betreiben der Vorrichtung (100) zur Erzeugung von Wasserstoff und festem Kohlenstoff und der Energieerzeugungsanlageneinheit (200) bei hohen Lasten nach einem dritten Modus
wobei eine hohe Last mehr als 50 % der maximalen Last entspricht.

10. Anlage nach einem der vorhergehenden Ansprüche, wobei die Vorrichtung (100) zur Erzeugung von Wasserstoff und festem Kohlenstoff einen Plasmareaktor (120) aufweist, der umfasst
i) einen Plasmaabschnitt umfassend
• eine Anode und eine Kathode zum Generieren eines Lichtbogens, wobei sich der Bogen innerhalb des Plasmaabschnitts erstreckt, und
• mindestens eine erste Zuleitung zum Einleiten eines C₁- bis C₄-alkanhaltigen Plasmagases in den Plasmaabschnitt des Reaktors,
• wobei die Anode einen Hohlkanal entlang der Strömungsrichtung des Hauptstroms des Plasmagases aufweist, der eine Innenfläche, einen Auslass in der Strömungsrichtung des Hauptstroms des Plasmagases, der das offene Ende der Anode in der Strömungsrichtung des Hauptstroms bildet, und mindestens einen Einlass zur Aufnahme des über die mindestens eine erste Zuleitung in den Plasmaabschnitt des Reaktors eingeleiteten C₁- bis C₄-alkanhaltigen Plasmagases aufweist, wobei der Einlass das in die zu der Strömungsrichtung des Hauptstroms entgegengesetzte Richtung weisende offene Ende der Anode bildet, und wobei die Anode so konfiguriert ist, dass das Plasmagas durch den Hohlkanal über das offene Ende der Anode, das in die zu der Strömungsrichtung des Hauptstroms entgegengesetzte Richtung weist, und das offene Ende der Anode in der Strömungsrichtung des Hauptstroms strömt, wobei das Plasmagas die Innenfläche des Hohlkanals der Anode bei seinem Durchgang durch die Anode berührt, und
• wobei die Anode und die Kathode so angeordnet sind, dass der von ihnen erzeugte Bogen in dem Plasmaabschnitt gebildet wird, um in dem Plasmaabschnitt aus dem über die mindestens eine erste Zuleitung in den Plasmaabschnitt eingeleiteten C₁- bis C₄-alkanhaltigen Plasmagas ein plasmatisches Plasmagas zu bilden, und wobei sich die Fußpunkte des die Anode berührenden Lichtbogens auf der Innenfläche des Hohlkanals der Anode befinden, und
ii) einen zweiten Reaktorabschnitt direkt stromabwärts des Plasmaabschnitts des Reaktors in der Strömungsrichtung des Hauptstroms, wobei der zweite Reaktorabschnitt umfasst
• einen ersten Unterabschnitt und einen zweiten Unterabschnitt, wobei der zweite Unterabschnitt in der Strömungsrichtung des Hauptstroms direkt stromabwärts des ersten Unterabschnitts liegt, und
• Auslassmittel zum Abziehen von Komponenten aus dem Reaktor, wobei sich die Auslassmittel an dem Ende des zweiten Reaktorabschnitts in der Strömungsrichtung des Hauptstroms befinden, wobei
• der erste Unterabschnitt mindestens eine zweite Zuleitung zum Einleiten eines C₁- bis C₄-alkanhaltigen Gases in den zweiten Reaktorabschnitt umfasst, wobei
• die mindestens eine zweite Zuleitung so angeordnet ist, dass das über die mindestens eine zweite Zuleitung in den Reaktor eingeleitete C₁- bis C₄-alkanhaltige Gas in der Strömungsrichtung des Hauptstroms an einer Stelle stromabwärts der Fußpunkte des Lichtbogens in das plasmatische Gas eingeleitet wird, so dass sich in dem ersten Unterabschnitt des zweiten Reaktorabschnitts stromabwärts der mindestens einen zweiten Zuleitung ein Gemisch aus dem den Plasmaabschnitt verlassenden plasmatischen Plasmagas und dem C₁- bis C₄-alkanhaltigen Gas der mindestens einen zweiten Zuleitung bildet, und
• wobei die Stelle der mindestens einen zweiten Zuleitung entlang der Strömungsrichtung des Hauptstroms den Beginn des zweiten Reaktorabschnitts und seines ersten Unterabschnitts definiert, und
• wobei das Volumen des Plasmaabschnitts, das an der stromaufwärtigsten Stelle, an der die Innenfläche des Hohlkanals der Anode zu dem Lichtbogen weist, beginnt und bis zu dem Ende des Plasmaabschnitts des Reaktors reicht, ein Volumen in dem Bereich von 0,0001 m³ bis 0,4 m³, vorzugsweise in dem Bereich von 0,001 bis 0,2 m³, aufweist und ein Referenzvolumen definiert, und
• wobei das Volumen des ersten Unterabschnitts des zweiten Reaktorabschnitts in dem Bereich des 10- bis 200-fachen des Referenzvolumens liegt, vorzugsweise in dem Bereich des 20- bis 100-fachen des Referenzvolumens, und
• wobei das Volumen des gesamten zweiten Reaktorabschnitts in dem Bereich des 20- bis 2000-fachen des Referenzvolumens liegt, vorzugsweise in dem Bereich des 40- bis 1000-fachen des Referenzvolumens, und
• wobei der Reaktor in dem ersten Unterabschnitt des zweiten Reaktorabschnitts und/oder in dem Plasmaabschnitt in dem Bereich stromabwärts in der Strömungsrichtung des Hauptstroms von den Fußpunkten des Lichtbogens auf der Innenfläche des Hohlkanals der Anode bis zu dem Ende des Plasmaabschnitts an mindestens einer Stelle einen Strömungsquerschnitt quer zu der Strömungsrichtung des Hauptstroms umfasst, der mindestens um den Faktor 5, vorzugsweise mindestens um den Faktor 10, größer ist als der mittlere Strömungsquerschnitt der Anode quer zu der Strömungsrichtung des Hauptstroms in dem Bereich der Fußpunkte des Lichtbogens auf der Innenfläche des Hohlkanals der Anode.

11. Verfahren zum Betreiben der Anlage nach einem der vorhergehenden Ansprüche, wobei die Steuerung (600) einen Wert, der einer Information in Bezug auf die Energie in dem externen Stromnetz (300) entspricht, als eine Eingabe erhält und,
i) nach einem ersten Modus einen Befehl zum Betreiben der Energieerzeugungsanlageneinheit (200) bei einer hohen Last und zum Abschalten der Vorrichtung (100) zur Erzeugung von Wasserstoff und festem Kohlenstoff ausgibt; oder
ii) nach einem zweiten Modus einen Befehl zum Betreiben der Vorrichtung (100) zur Erzeugung von Wasserstoff und festem Kohlenstoff bei einer hohen Last und zum Abschalten der Energieerzeugungsanlageneinheit (200) ausgibt; oder
iii) nach einem dritten Modus einen Befehl zum Betreiben der Vorrichtung (100) zur Erzeugung von Wasserstoff und festem Kohlenstoff und der Energieerzeugungsanlageneinheit (200) bei hohen Lasten ausgibt
wobei eine hohe Last mehr als 50 % der maximalen Last entspricht.

12. Verfahren nach Anspruch 11, wobei die Steuerung (600) betrieben wird
nach Modus iii), wenn der Wert innerhalb eines vordefinierten Toleranzbereichs relativ zu einem Referenzwert liegt, oder
nach Modus i) oder Modus ii), wenn der Wert oberhalb oder unterhalb des Toleranzbereichs in Bezug auf den Referenzwert liegt.

13. Verfahren nach einem der Ansprüche 11 und 12, wobei einem Einlass (211) der Energieerzeugungsanlageneinheit (200) ein Brenngas zugeführt wird, das Erdgas umfasst oder daraus besteht, oder ein Gemisch, das Erdgas und Wasserstoff umfasst oder daraus besteht,
wobei Wasserstoff vorzugsweise direkt aus einem ersten Gasauslass (132) und/oder einem zweiten Gasauslass (152) der Vorrichtung (100) zur Erzeugung von Wasserstoff und festem Kohlenstoff zugeführt wird,
wobei das Verhältnis des Wasserstoffs vorzugsweise so bestimmt wird, dass der Wasserstoffanteil in dem Brenngas 0,5 - 100 Vol.-%, bevorzugter 1 - 25 Vol.%, besonders bevorzugt 1 - 20 Vol.% beträgt.

14. Verfahren nach einem der Ansprüche 11 bis 13, wobei ein in der Vorrichtung (100) zur Erzeugung von Wasserstoff und festem Kohlenstoff enthaltener thermischer Plasmagenerator (121) mit Energie aus dem externen Stromnetz (300) oder mit von der Energieerzeugungsanlageneinheit (200) erzeugter elektrischer Energie oder einem Mix aus den vorgenannten Energiearten betrieben wird.

## Revendications

1. Installation à production et consommation d'énergie pouvant être commandées, comportant :
a) au moins un dispositif (100) pour la production d'hydrogène et de carbone solide à partir d'un gaz contenant un alcane en C₁ à C₄ en utilisant de l'énergie électrique qui inclut au moins un dispositif (130) pour séparer le carbone solide de l'hydrogène,
b) une tranche de centrale électrique (200) avec une empreinte carbone de 0 à 600 g_{CO2}/kWh_{used}, et
c) une commande (600) configurée pour générer une instruction qui détermine l'état de fonctionnement du dispositif (100) pour la production d'hydrogène et de carbone solide et de la tranche de centrale électrique (200) en fonction d'une information concernant une puissance dans un réseau électrique externe (300),
dans laquelle la tranche de centrale électrique (200) est une centrale électrique au gaz ou une centrale électrique au gaz à cycle combiné.

2. Installation selon la revendication 1, dans laquelle la tranche de centrale électrique (200) a une empreinte carbone de 0 à 500 g_{CO2}/kWh_{used}, de manière plus préférée de 0 à 450 g_{CO2}/kWh_{used}, de manière encore plus préférée de 0 à 400 g_{CO2}/kWh_{used}, de manière la plus préférée de 0 à 350 g_{co2}/kWh_{used}.

3. Installation selon l'une des revendications précédentes, dans laquelle le dispositif (100) pour la production d'hydrogène et de carbone solide inclut en outre au moins un élément parmi :
• un réacteur à plasma (120),
• un dispositif d'enrichissement en hydrogène (140),
• au moins un échangeur de chaleur, et
• un réservoir de stockage (150) pour stocker au moins temporairement de l'hydrogène ;
dans laquelle le réacteur à plasma (120) comporte de préférence un générateur de plasma thermique (121).

4. Installation selon l'une des revendications précédentes, dans laquelle le dispositif (100) pour la production d'hydrogène et de carbone solide inclut en outre au moins une sortie parmi une première sortie de gaz (132) et une seconde sortie de gaz (152),
dans laquelle la première sortie de gaz (132) et/ou la seconde sortie de gaz (152) sont reliées à une entrée de gaz combustible (211) de la tranche de centrale électrique (200), de préférence avec au moins un étage de compression intermédiaire (500).

5. Installation selon l'une des revendications précédentes, dans laquelle l'installation comporte en outre des moyens pour alimenter le dispositif (100) pour la production d'hydrogène et de carbone solide avec de l'énergie provenant du réseau électrique externe (300), de l'énergie électrique provenant de ladite tranche de centrale électrique (200) ou un mélange des types d'énergie susmentionnés,
dans laquelle les moyens comportent de préférence au moins un élément parmi un connecteur de réseau (301) et un transformateur.

6. Installation selon l'une des revendications précédentes, dans laquelle la commande (600) est en outre configurée pour faire fonctionner le au moins un dispositif (100) pour la production d'hydrogène et de carbone solide et la tranche de centrale électrique (200) d'une telle manière que la somme des heures de pleine charge des installations respectives n'est pas supérieure à 15 000 heures de pleine charge par an, de manière préférée n'est pas supérieure à 14 000 heures de pleine charge par an, de manière encore plus préférée n'est pas supérieure à 13 000 heures de pleine charge par an, de manière la plus préférée n'est pas supérieure à 12 000 heures de pleine charge par an.

7. Installation selon l'une des revendications précédentes, dans laquelle la commande (600) est en outre configurée pour faire fonctionner la tranche de centrale électrique (200)
pendant au moins 250 heures de pleine charge par an pendant des durées auxquelles le au moins un dispositif (100) pour la production d'hydrogène et de carbone solide ne fonctionne pas à plus de 50 % de sa capacité nominale, en particulier à 0 % de sa capacité nominale,
de manière préférée pendant au moins 500 heures de pleine charge par an pendant des durées auxquelles le au moins un dispositif (100) pour la production d'hydrogène et de carbone solide ne fonctionne pas à plus de 50 % de sa capacité nominale, en particulier à 0 % de sa capacité nominale,
de manière plus préférée pendant au moins 750 heures de pleine charge par an pendant des durées auxquelles le au moins un dispositif (100) pour la production d'hydrogène et de carbone solide ne fonctionne pas à plus de 50 % de sa capacité nominale, en particulier à 0 % de sa capacité nominale,
de manière encore plus préférée pendant au moins 1 000 heures de pleine charge par an pendant des durées auxquelles le au moins un dispositif (100) pour la production d'hydrogène et de carbone solide ne fonctionne pas à plus de 50 % de sa capacité nominale, en particulier à 0 % de sa capacité nominale,
de manière la plus préférée pendant au moins 1 500 heures de pleine charge par an pendant des durées auxquelles le au moins un dispositif (100) pour la production d'hydrogène et de carbone solide ne fonctionne pas à plus de 50 % de sa capacité nominale, en particulier à 0 % de sa capacité nominale.

8. Installation selon l'une des revendications 1 à 6, dans laquelle la commande (600) est en outre configurée pour faire fonctionner le au moins un dispositif (100) pour la production d'hydrogène et de carbone solide
pendant au moins 250 heures de pleine charge par an pendant des durées auxquelles la tranche de centrale électrique (200) ne fonctionne à plus de 50 % de sa capacité nominale, en particulier à 0 % de sa capacité nominale,
de manière préférée pendant au moins 500 heures de pleine charge par an pendant des durées auxquelles la tranche de centrale électrique (200) ne fonctionne pas à plus de 50 % de sa capacité nominale, en particulier à 0 % de sa capacité nominale,
de manière la plus préférée pendant au moins 1 000 heures de pleine charge par an pendant des durées auxquelles la tranche de centrale électrique (200) ne fonctionne à plus de 50 % de sa capacité nominale, en particulier à 0 % de sa capacité nominale
de manière encore plus préférée pendant au moins 1 500 heures de pleine charge par an pendant des durées auxquelles la tranche de centrale électrique (200) ne fonctionne pas à plus de 50 % de sa capacité nominale, en particulier à 0 % de sa capacité nominale,
de manière la plus préférée pendant au moins 2 000 heures de pleine charge par an pendant des durées auxquelles la tranche de centrale électrique (200) ne fonctionne pas à plus de 50 % de sa capacité nominale, en particulier à 0 % de sa capacité nominale.

9. Installation selon l'une des revendications précédentes, dans laquelle la commande (600) est configurée pour générer
i) une instruction de faire fonctionner la tranche de centrale électrique (200) à une charge élevée et d'arrêter le dispositif (100) pour la production d'hydrogène et de carbone solide en fonction d'un premier mode, ou
ii) une instruction de faire fonctionner le dispositif (100) pour la production d'hydrogène et de carbone solide à une charge élevée et d'arrêter la tranche de centrale électrique (200) en fonction d'un deuxième mode, ou
iii) une instruction de faire fonctionner le dispositif (100) pour la production d'hydrogène et de carbone solide et la tranche de centrale électrique (200) à des charges élevées en fonction d'un troisième mode
dans laquelle une charge élevée correspond à plus de 50 % de la charge maximale.

10. Installation selon l'une des revendications précédentes, dans laquelle le dispositif (100) pour la production d'hydrogène et de carbone solide inclut un réacteur à plasma (120) qui comporte
i) une section de plasma comportant
• une anode et une cathode pour générer un arc électrique, l'arc s'étendant à l'intérieur de la section de plasma, et
• au moins une première ligne d'alimentation pour introduire un gaz plasma contenant un alcane en C₁ à C₄ dans la section de plasma du réacteur,
• dans laquelle l'anode a un canal creux le long de la direction d'écoulement du flux principal du gaz plasma qui a une surface intérieure, une sortie dans la direction d'écoulement du flux principal du gaz plasma qui forme l'extrémité ouverte de l'anode dans la direction d'écoulement du flux principal, et au moins une entrée pour recevoir le gaz plasma contenant un alcane en C₁ à C₄ introduit dans la section de plasma du réacteur via la au moins une première ligne d'alimentation dans laquelle l'entrée forme l'extrémité ouverte de l'anode dirigée dans la direction opposée à la direction d'écoulement du flux principal, et dans laquelle l'anode est configurée de telle sorte que le gaz plasma s'écoule à travers le canal creux via l'extrémité ouverte de l'anode dirigée dans la direction opposée à la direction d'écoulement du flux principal et l'extrémité ouverte de l'anode dans la direction d'écoulement du flux principal, dans laquelle le gaz plasma est en contact avec la surface intérieure du canal creux de l'anode sur son passage à travers l'anode, et
• dans laquelle ladite anode et ladite cathode sont agencées de telle sorte que l'arc généré par elles est formé dans ladite section de plasma pour former un gaz plasmagène dans ladite section de plasma à partir du gaz plasma contenant un alcane en C₁ à C₄ introduit dans ladite section de plasma par ladite au moins une première ligne d'alimentation, et dans laquelle les points de pieds de l'arc électrique en contact avec l'anode sont situés sur la surface intérieure du canal creux de l'anode, et
ii) une seconde section de réacteur directement en aval de la section de plasma du réacteur dans la direction d'écoulement du flux principal, la seconde section de réacteur comportant
• une première sous-section et une seconde sous-section, dans laquelle la seconde sous-section est directement en aval de la première sous-section dans la direction d'écoulement du flux principal, et
• des moyens de sortie pour extraire des composants du réacteur, dans laquelle les moyens de sortie sont situés à la fin de la seconde section de réacteur dans la direction d'écoulement du flux principal, dans laquelle
• la première sous-section comporte au moins une seconde ligne d'alimentation pour introduire un gaz contenant un alcane en C₁ à C₄ dans la seconde section de réacteur, dans laquelle
• la au moins une seconde ligne d'alimentation est agencée de telle sorte que le gaz contenant un alcane en C₁ à C₄ qui est introduit dans le réacteur via la au moins une seconde ligne d'alimentation est introduit dans le gaz plasmagène à une position en aval des points de pieds de l'arc électrique dans la direction d'écoulement du flux principal, de sorte que dans la première sous-section de la seconde section de réacteur en aval de la au moins une seconde ligne d'alimentation, un mélange est formé à partir du gaz plasmagène quittant la section de plasma et du gaz contenant un alcane en C₁ à C₄ de la au moins une seconde ligne d'alimentation, et
• dans laquelle la position de la au moins une ligne d'alimentation le long de la direction d'écoulement du flux principal définit le début de la seconde section de réacteur et de sa première sous-section, et
• dans laquelle le volume de la section de plasma qui commence à la position la plus en aval à laquelle la surface intérieure du canal creux de l'anode fait face à l'arc électrique et atteint la fin de la section de plasma du réacteur a un volume dans l'intervalle de 0,0001 m³ à 0,4 m³, de préférence dans l'intervalle de 0,001 à 0,2 m³, et définit un volume de référence, et
• dans laquelle le volume de la première sous-section de la seconde section de réacteur est dans l'intervalle de 10 à 200 fois le volume de référence, de préférence dans l'intervalle de 20 à 100 fois le volume de référence, et
• dans laquelle le volume de la seconde section totale de réacteur est dans l'intervalle de 20 à 2 000 fois le volume de référence, de préférence dans l'intervalle de 40 à 1 000 fois le volume de référence, et
• dans laquelle le réacteur a dans la première sous-section de la seconde section de réacteur et/ou dans la section de plasma dans la plage en aval dans la direction d'écoulement du flux principal des points de pieds de l'arc électrique sur la surface intérieure du canal creux de l'anode jusqu'à la fin de la section de plasma au moins en un point, une section transversale d'écoulement transversalement à la direction d'écoulement du flux principal qui est supérieure d'un facteur d'au moins 5, de préférence d'un facteur d'au moins 10, par rapport à la section transversale d'écoulement moyenne de l'anode transversalement à la direction d'écoulement du flux principal dans la plage des points de pieds de l'arc électrique sur la surface intérieure du canal creux de l'anode.

11. Procédé pour faire fonctionner l'installation de l'une des revendications précédentes, dans lequel la commande (600) reçoit une valeur correspondant à une information concernant la puissance dans le réseau électrique externe (300) en tant qu'entrée, et
i) en fonction d'un premier mode, génère une instruction de faire fonctionner la tranche de centrale électrique (200) à une charge élevée et d'arrêter le dispositif (100) pour la production d'hydrogène et de carbone solide ; ou
ii) en fonction d'un deuxième mode, génère une instruction de faire fonctionner le dispositif (100) pour la production d'hydrogène et de carbone solide à une charge élevée et d'arrêter la tranche de centrale électrique (200) ; ou
iii) en fonction d'un troisième mode, génère une instruction de faire fonctionner le dispositif (100) pour la production d'hydrogène et de carbone et la tranche de centrale électrique (200) à des charges élevées
dans laquelle une charge élevée correspond à plus de 50 % de la charge maximale.

12. Procédé selon la revendication 11, dans lequel la commande (600) fonctionne
selon le mode iii), si la valeur est dans les limites d'une plage de tolérances prédéfinie par rapport à une valeur de référence, ou
selon le mode i) ou ii), si la valeur est supérieure ou inférieure à la plage de tolérances par rapport à la valeur de référence.

13. Procédé selon l'une des revendications 11 et 12, dans lequel une entrée (211) de la tranche de centrale électrique (200) est alimentée en gaz combustible comportant ou constitué de gaz naturel ou en mélange comportant ou constitué de gaz naturel et d'hydrogène,
dans lequel l'hydrogène est de préférence directement fourni à partir d'une première sortie de gaz (132) et/ou d'une seconde sortie de gaz (152) du dispositif (100) pour la production d'hydrogène et de carbone solide,
dans lequel le rapport de l'hydrogène est de préférence déterminé de telle sorte que la proportion d'hydrogène dans le gaz combustible est de 0,5 à 100 % en volume, de manière plus préférée de 1 à 25 % en volume, de manière la plus préférée de 1 à 20 % en volume.

14. Procédé selon l'une des revendications 11 à 13, dans lequel un générateur de plasma thermique (121) qui est compris dans le dispositif (100) pour la production d'hydrogène et de carbone solide est entraîné avec de l'énergie provenant du réseau électrique externe (300) ou de l'énergie électrique produite par la tranche de centrale électrique (200) ou un mélange des types d'énergie susmentionnés.
